# EUROPÄISCHE PATENTSCHRIFT

(11) **EP 1 312 991 B1**
(45) Veröffentlichungstag und Bekanntmachung des Hinweises auf die Patenterteilung: **07.03.2007**
(21) Anmeldenummer: 02025463.7
(22) Anmeldetag: 15.11.2002
(51) Int. Cl.: G05B 19/042

(54) **Aktuator-Sensor-Interface-System sowie Verfahren zum Betreiben eines solchen**
Actuator sensor interface system as well as method for its operation
Système d'interface actionneur capteur et procédé pour le commander

(30) Priorität: 15.11.2001 DE 10156148
(43) Veröffentlichungstag der Anmeldung: 21.05.2003
(73) Patentinhaber: Bihl + Wiedemann GmbH, 68199 Mannheim (DE)
(72) Erfinder: Wiedemann, Bernhard, 67574 Osthofen (DE)
(74) Vertreter: Mierswa, Klaus

(56) Entgegenhaltungen:
- EP-A- 0 466 151
- WO-A-96/11441
- DE-A- 19 947 501

## Beschreibung

### Technisches Gebiet:

Die Erfindung betrifft ein Aktuator-Sensor-Interface-System mit mindestens zwei Slaves, einem Master, einem Aktuator-Sensor-Interface-Bus, AS-i-Bus, und einer Stromversorgungseinheit, welche die Slaves über den AS-i-Bus mit Strom zu versorgen imstande ist, wobei jeder Slave eine binäre Adresse besitzt und durch Aufmodulieren einer solchen Folge von Sendeimpulsen auf den AS-i-Bus, welche der binären Adresse des Slaves entspricht, aufrufbar und zur Abgabe eines Antwortsignals veranlaßbar ist, welches aus einer durch den aufgerufenen Slave auf den AS-i-Bus aufmodulierten Folge von Antwortimpulsen besteht, gemäß dem Oberbegriff des Anspruchs 1 sowie ein Verfahren zum Betreiben eines derartigen Aktuator-Sensor-Interface-Systems gemäß dem Oberbegriff des Anspruchs .

### Stand der Technik:

Ein AS-Interface oder Aktuator Sensor Interface ist ein einfaches Bussystem für die Vernetzung von binären Sensoren und Aktuatoren. Das Aktuator-Sensor-Interface-System dient zur Ankopplung von Sensoren bzw. Aktuatoren an einen Hostrechner, welcher z.B. eine speicherprogrammierbare Steuerung oder ein PC oder ein anderer Busrechner sein kann. Ein Aktuator-Sensor-Interface-System umfaßt einen Master und mindestens einen Slave; im Regelfall sind mehrere Slaves vorhanden. Die Slaves dienen zur Ankopplung der Sensoren bzw. Aktuatoren an das Aktuator-Sensor-Interface-System.

Der Master und die Slaves sind jeweils an einen gemeinsamen AS-i-Bus und hierbei im allgemeinen parallel zueinander angeschlossen, welcher Bus im Regelfall aus lediglich zwei Leitungen besteht. Um große Leitungslängen von typischerweise über 100m zu erlauben, können Extender oder Repeater im AS-i-Bus zwischengeschaltet sein. Die Sensoren bzw. Aktuatoren sind somit über die Slaves, den AS-i-Bus und den Master mit dem Hostrechner verbunden.

Der Master stellt die Datenverbindung des Aktuator-Sensor-Interface-Systems zum Hostrechner her. An den Hostrechner werden über den AS-i Master die meist binären Sensoren/Aktuatoren angeschlossen, wobei der Master die auf das Bussystem von den Slaves aufgegebenen Signale in einem vorgegebenen Zeitraster, das AS-i Masterprogramm, dem Hostrechner zur Verfügung stellt.

Im allgemeinen werden in Aktuator-Sensor-Interface-Systemen binäre Sensoren bzw. Aktuatoren benutzt. Jeder Slave besitzt eine binäre Adresse. Der Master ruft z.B. in zyklischer Reihenfolge nacheinander alle Slaves mit ihrer Adresse auf und tauscht mit ihnen Datentelegramme aus. Innerhalb jedes Zyklus soll normalerweise mit jedem Slave genau ein Datentelegramm ausgetauscht werden; die gesamte Zyklusdauer beträgt hierbei typischerweise einige Millisekunden.

Zum Aufrufen eines Slaves moduliert der Master eine bestimmte, der binären Adresse des Slaves entsprechende Folge von Sendeimpulsen auf den AS-i-Bus auf. Der solchermaßen aufgerufene, d.h. adressierte Slave wird durch den Aufruf zur Abgabe eines Antwortsignals veranlaßt, welches aus einer durch den aufgerufenen Slave auf den AS-i-Bus aufmodulierten Folge von Antwortimpulsen besteht, die vom Master eingelesen werden können. Um die Antwortimpulse ungestört empfangen zu können, legt der Master in der Regel eine Sendepause von einer bestimmten Dauer ein, bevor er den nächsten Slave aufruft. Die einzelnen Sende- und Antwortimpulse besitzen dabei eine Zeitdauer von typischerweise ca. 3 Mikrosekunden.

Eine vorteilhafte Eigenschaft hinsichtlich des Hardware-Aufwandes und die Kosten senkende Eigenschaft der Aktuator-Sensor-Interface-Systeme besteht darin, daß der AS-i-Bus sowohl zur Stromversorgung des Masters und der Slaves als auch zur Datenübertragung zwischen denselben verwendet wird. Eine Besonderheit bei AS-Interface ist somit die Spannungs- bzw. Stromversorgung und die Datenübertragung über dieselben zwei Leitungen. Zur Stromversorgung des Masters und der Slaves dient eine Stromversorgungseinheit, z.B. ein Netzteil.

Die gleichzeitige Spannungsversorgung und Datenübertragung erfordert eine Datenentkopplung zwischen der Spannungs- bzw. Stromquelle und den restlichen AS-Interface Teilnehmern. Der Ausgang des Netzteils ist meist über eine Datenentkopplung ebenfalls an den AS-i-Bus angeschlossen. Die Datenentkopplung dient dazu, die zur Versorgung der Slaves und des Masters verwendete Gleichspannung von den auf den AS-i-Bus aufmodulierten Sende- und Antwortimpulsen abzukoppeln. Die Datenentkopplung ist im Wesentlichen ein Tiefpaß, welcher die Gleichspannung aus dem Netzteil in den AS-i-Bus passieren läßt, die Sende- und Antwortimpulse jedoch nicht aus dem AS-i-Bus über das Netzteil abfließen läßt. Die Datenentkopplung ist meist Bestandteil eines speziellen AS-Interface Netzgerätes. Es existieren auch AS-Interface-Master in niederer Schutzart mit integrierter Datenentkopplung. Mit Hilfe dieser AS-i-Master kann ein Standard-Netzteil ohne Datenentkopplung den AS-Interface Kreis über die Datenentkopplung im AS-Interface Master mit Spannung versorgen. Die Leitungslänge bei AS-Interfaces ist aufgrund der Datenübertragung und aufgrund von Reflektionen auf 100m begrenzt. Darüber hinaus kann mit Hilfe zweier Extender oder zweier Repeater die Leitungslänge auf maximal 300m verlängert werden.

Fehlfunktionen eines Aktuator-Sensor-Interface-Systems werden häufig dadurch verursacht, daß z.B. aufgrund falscher Programmierung zwei Slaves dieselbe Adresse besitzen und daher durch eine Folge, insbesondere ein- und dieselbe, von Sendeimpulsen aufgerufen werden. Die Erkennung von derartigen Mehrfachadressierungen durch falsch programmierte Slaveadressen stellt derzeit Probleme aufgrund der uneindeutigen Erkennbarkeit mit Hilfe logischen Monitorings dar. Verschärft wird die Schwierigkeit der Erkennung von Mehrfachadressierungen durch die freie Topologie des Systems sowie durch den Einsatz von Repeatem und Extendern.

WO 96/11441 offenbart ein Modul, dass Mehrfachadressierungen der Slaves eines ASI Systems als letzter Schritt der Vorprogrammierung erkennen kann, indem ein Adapter eines Programmiergerätes an dem von der Busleitung leicht abtrennbaren integrierten Schaltkreis angeschlossen wird.

### Technische Aufgabe:

Der Erfindung liegt daher die Aufgabe zu Grunde, ein Aktuator-Sensor-Interface-System sowie ein Verfahren zum Betreiben eines solchen zu schaffen, welche die Erkennung einer Mehrfachadressierung von Slaves sowie eine Identifizierung der betroffenen Slaves eindeutig und unabhängig von der installierten Topologie des Aktuator-Sensor-Interface-Systems ermöglichen.

Die Aufgabe wird bei einem Aktuator-Sensor-Interface-System der eingangs genannten Gattung erfindungsgemäß gelöst durch eine Überwachungseinrichtung, welche die Antwortimpulse zu erfassen imstande ist und bei Überlagerung der Antwortsignale mindestens zweier Slaves ein Schalt- oder Warnsignal auslöst, so daß dasselbe ausgelöst wird, falls wenigstens zwei Slaves dieselbe binäre Adresse besitzen, diese Slaves durch eine Folge von Sendeimpulsen gleichzeitig zur Abgabe je ihres Antwortsignals veranlaßt worden sind und sich diese Antwortsignale überlagern.

Die Aufgabe wird ferner bei einem Verfahren zum Betreiben eines Aktuator-Sensor-Interface-Systems, umfassend mindestens zwei Slaves, einen Master, einen Aktuator-Sensor-Interface-Bus, AS-i-Bus, an welchen die Slaves und der Master angeschlossen sind, sowie eine Stromversorgungseinheit, welche die Slaves über den AS-i-Bus mit Strom zu versorgen imstande ist, wobei jeder Slave eine binäre Adresse besitzt und durch Aufmodulieren einer solchen Folge von Sendeimpulsen auf den AS-i-Bus, welche der binären Adresse des Slaves entspricht, aufrufbar und zur Abgabe eines Antwortsignals veranlaßbar ist, welches aus einer durch den aufgerufenen Slave auf den AS-i-Bus aufmodulierten Folge von Antwortimpulsen besteht, erfindungsgemäß dadurch gelöst, daß die Antwortimpulse durch eine Überwachungseinrichtung erfaßt werden, welche bei Überlagerung der Antwortsignale mindestens zweier Slaves ein Schalt- oder Warnsignal auslöst, so daß dasselbe ausgelöst wird, falls wenigstens zwei Slaves dieselbe binäre Adresse besitzen, diese Slaves durch eine Folge von Sendeimpulsen gleichzeitig zur Abgabe je eines Antwortsignals veranlaßt werden und sich diese Antwortsignale überlagern.

Die Erfindung erlaubt somit eine Funktionserweiterung eines Bussystems zur Ansteuerung von miteinander vernetzten und kommunizierenden Slaves. Sie beschreibt einen Weg zur eindeutigen Erkennung von Mehrfachadressierungen von Slaves in Aktuator-Sensor-Interface-Systemen, ohne in die Topologie des AS-Interface Netzwerkes eingreifen zu müssen. Die Spannungsquelle kann in niederer Schutzart, zum Beispiel in IP20, belassen und trotzdem AS-Interface in hoher Schutzart genutzt werden. Auch Spannungsquellen, die in hoher Schutzart, zum Beispiel in IP65, ausgeführt sind, können verwendet werden. Das Schaltoder Warnsignal zeigt somit erfindungsgemäß an, daß zwei oder mehrere Slaves dieselbe binäre Adresse besitzen.

Gemäß einer bevorzugten Ausführungsform der Erfindung ist das Aktuator-Sensor-Interface-System imstande, in zyklischer Abfolge so viele verschiedene Folgen von Sendeimpulsen auf den AS-i-Bus aufzumodulieren, wie das Aktuator-Sensor-Interface-System Slaves aufweist, und zwischen je zwei Folgen von Sendeimpulsen eine Sendepause einzuhalten, in welcher kein Aufmodulieren von Sendeimpulsen auf den AS-i-Bus erfolgt.

Gemäß einer bevorzugten Variante des erfindungsgemäßen Verfahrens werden daher in zyklischer Abfolge so viele verschiedene Folgen von Sendeimpulsen auf den AS-i-Bus aufmoduliert, wie das Aktuator-Sensor-Interface-System Slaves aufweist, und es wird zwischen je zwei Folgen von Sendeimpulsen eine Sendepause eingehalten, in welcher keine Sendeimpulse auf den AS-i-Bus aufmoduliert werden.

Bei einwandfreier Funktion des Aktuator-Sensor-Interface-Systems entspricht hierbei jede Folge von Sendeimpulsen einer binären Adresse genau eines Slaves, d.h. alle Slaves werden in zyklischer Folge nacheinander aufgerufen und zur Abgabe einer Folge von Antwortimpulsen veranlaßt. Die Erzeugung der Sendeimpulse muß nicht notwendig durch den Master erfolgen; vielmehr kann hierzu ein eigenes Adressiergerät, welches z.B. vorübergehend zu Kontrollzwecken an den AS-i-Bus angeschlossen wird, verwendet werden. Die Sendepausen dienen dazu, einen ungestörten Empfang der Antwortsignale zu ermöglichen. Falls jedoch irrtümlich zwei oder mehr Slaves dieselbe binäre Adresse besitzen, überlagern sich deren Antwortsignale, was erfindungsgemäß festgestellt wird und zur Auslösung des Schalt- oder Warnsignals führt.

Die Überlagerung zweier bzw. mehrerer Antwortsignale, Sendeströme, welche verrät, daß zwei bzw. mehrere Slaves gleichzeitig aufgerufen wurden und daher dieselbe binäre Adresse besitzen, kann auf verschiedene Weisen erkannt werden. Insbesondere läßt sich hierzu vorteilhaft der Umstand nützen, daß der von der Stromversorgungseinheit abgegebene Strom bzw. der im AS-i-Bus fließende Strom durch das Aufmodulieren der Antwortimpulse auf den AS-i-Bus verändert wird; die durch einen Antwortimpuls ausgelöste Stromänderung beträgt typischerweise bis zu 60 mA. Bei Überlagerung zweier Antwortimpulse, Sendeströme, steigt diese Stromänderung auf typischerweise etwa das Doppelte dieses Wertes. Die Schwankungen, welchen der von der Stromversorgungseinheit abgegebene Strom bzw. der im AS-i-Bus fließende Strom unterworfen ist, lassen sich daher vorteilhaft zum Zwecke der Erkennung einer Überlagerung der Antwortsignale zweier oder mehrerer Slaves heranziehen. Denn beim Ansprechen einer Adresse eines Slaves zieht dieser als Antwort aus der Stromversorgungseinheit einen seiner Antwort entsprechenden Strom, Sendestrom, welcher Sendestrom prinzipiell eine Stromerhöhung des von der Stromversorgungseinheit abgegebenen Stromes bzw. der im AS-i-Bus fließenden Stromstärke zur Folge hat.

Gemäß einer bevorzugten Ausführungsform der Erfindung ist daher die Überwachungseinrichtung imstande, eine Überlagerung zweier Antwortsignale daran zu erkennen, daß die Amplitude der Schwankungen der von der Stromversorgungseinheit abgegebenen Stromstärke oder der im AS-i-Bus fließenden Stromstärke einen vorgegebenen Schwellenwert übersteigt.

Bevorzugt ist hierbei der Schwellenwert größer als die maximale Amplitude derjenigen Schwankungen, mit welchen die von der Stromversorgungseinheit abgegebene Stromstärke oder die im AS-i-Bus fließende Stromstärke behaftet ist und welche dadurch verursacht werden, daß ein Slave ein Antwortsignal abgibt, m.a.W. der Schwellenwert ist größer als der einfache Sendestrom eines Slaves. Der Schwellenwert ist aber kleiner als das Doppelte dieser Amplitude, m.a.W. der Schwellenwert ist kleiner als der zweifache Sendestrom eines Slaves.

Insbesondere kann der Schwellenwert größer sein als das 1,1-fache der maximalen Amplitude derjenigen Schwankungen, mit welchen die von der Stromversorgungseinheit abgegebene Stromstärke oder die im AS-i-Bus fließende Stromstärke behaftet ist und welche dadurch verursacht werden, daß ein Slave ein Antwortsignal abgibt, und kleiner sein kann als das 1,9-fache dieser Amplitude.

Der Schwellenwert ist so gewählt, daß dann, wenn ein einzelner Slave ein Antwortsignal abgibt, der Schwellenwert nicht überschritten wird, sondern dann, wenn sich die Antwortsignale zweier oder mehrerer Slaves überlagern, der Schwellenwert überschritten wird.

Gemäß einer vorteilhaften Variante der Erfindung werden die Sendeimpulse mittels einer Sendesignal-Dekodiereinrichtung erfaßt, welche in jeder Folge von Sendeimpulsen, welche einer binären Adresse eines Slaves entspricht, diese Adresse zu erkennen imstande ist.

Gemäß einer bevorzugten Ausführungsform weist das Aktuator-Sensor-Interface-System daher eine Sendesignal-Dekodiereinrichtung auf, welche die Sendeimpulse zu erfassen imstande ist und in jeder Folge von Sendeimpulsen, welche einer binären Adresse eines Slaves entspricht, diese Adresse zu erkennen imstande ist, d.h. die gesendeten Adressen mitzulesen.

Insbesondere kann hierbei das Schalt- oder Warnsignal erfaßt werden und bei Feststellung desselben die zuletzt erkannte Adresse eines Slaves angezeigt und/oder gespeichert werden. Auf diese Weise ist es sofort möglich, diejenige Adresse, welche fehlerhafterweise zwei oder mehr Slaves zugleich aufruft, abzulesen bzw. in Erfahrung zu bringen. Zu diesem Zweck kann die Sendesignal-Dekodiereinrichtung imstande sein, das Schalt- oder Warnsignal zu erfassen und bei Feststellung desselben die zuletzt erkannte Adresse eines Slaves anzuzeigen und/ oder zu speichern.

Die von der Stromversorgungseinheit abgegebene bzw. die im AS-i-Bus fließende Stromstärke kann auf verschiedene Weisen erfaßt werden. Prinzipiell sind zu diesem Zweck alle Methoden zur Strommessung heranziehbar.

Beispielsweise kann der an einem zwischen der Stromversorgungseinheit und einer Leitung des AS-i-Busses oder im AS-i-Bus zwischengeschalteten Widerstand erfolgende Spannungsabfall abgegriffen, der Überwachungseinrichtung zugeführt und als ein Maß für die von der Stromversorgungseinheit abgegebene bzw. für die im AS-i-Bus fließende Stromstärke verwendet werden, wobei entweder aus diesem Spannungsabfall der Betrag der von der Stromversorgungseinheit abgegebenen Stromstärke bzw. der Betrag der im AS-i-Bus fließenden Stromstärke ermittelt wird, oder aus den Schwankungen dieses Spannungsabfalls die Amplitude der Schwankungen der von der Stromversorgungseinheit abgegebenen Stromstärke bzw. die Amplitude der Schwankungen der im AS-i-Bus fließenden Stromstärke ermittelt wird.

Zu diesem Zweck kann das Aktuator-Sensor-Interface-System einen Widerstand aufweisen, welcher zwischen der Stromversorgungseinheit und einer Leitung des AS-i-Busses oder im AS-i-Bus zwischengeschaltet ist, so daß der an dem Widerstand erfolgende Spannungsabfall ein Maß für die von der Stromversorgungseinheit abgegebene bzw. für die im AS-i-Bus fließende Stromstärke ist, wobei die Überwachungseinrichtung entweder diesen Spannungsabfall zu erfassen und hieraus den Betrag der von der Stromversorgungseinheit abgegebenen Stromstärke bzw. den Betrag der im AS-i-Bus fließenden Stromstärke zu ermitteln imstande ist, oder die Schwankungen dieses Spannungsabfalls zu erfassen und hieraus die Amplitude der Schwankungen der von der Stromversorgungseinheit abgegebenen Stromstärke bzw. die Amplitude der Schwankungen der im AS-i-Bus fließenden Stromstärke zu ermitteln imstande ist.

Der konstante Anteil der an dem Widerstand abgegriffenen Spannung kann selbstverständlich durch einen Kondensator abgeblockt werden.

Eine andere, vorteilhafte Möglichkeit besteht darin, die Antwortimpulse induktiv auszukoppeln. Hierzu kann ein Übertrager mit einer ersten und einer zweiten Wicklung verwendet werden, wobei die erste Wicklung zwischen der Stromversorgungseinheit und einer Leitung des AS-i-Busses oder in einer Leitung des AS-i-Busses zwischengeschaltet ist, und die Schwankungen der von der zweiten Wicklung abgegebenen Spannung als ein Maß für die Schwankungen der von der Stromversorgungseinheit abgegebenen Stromstärke bzw. für die Schwankungen der im AS-i-Bus fließenden Stromstärke verwendet werden und aus dem zeitlichen Verhalten der von der zweiten Wicklung abgegebenen Spannung die Amplitude der Schwankungen der von der Stromversorgungseinheit abgegebenen Stromstärke ermittelt wird bzw. die Amplitude der Schwankungen der im AS-i-Bus fließenden Stromstärke ermittelt wird.

Zu diesem Zweck kann ein erfindungsgemäßes Aktuator-Sensor-Interface-System einen Übertrager mit einer ersten und einer zweiten Wicklung aufweisen, wobei die erste Wicklung zwischen der Stromversorgungseinheit und einer Leitung des AS-i-Busses oder in einer Leitung des AS-i-Busses zwischengeschaltet ist, so daß die Schwankungen der von der zweiten Wicklung abgegebenen Spannung ein Maß für die Schwankungen der von der Stromversorgungseinheit abgegebenen Stromstärke bzw. für die Schwankungen der im AS-i-Bus fließenden Stromstärke sind und die Überwachungseinrichtung die von der zweiten Wicklung abgegebene Spannung zu erfassen und aus deren zeitlichem Verhalten die Amplitude der Schwankungen der von der Stromversorgungseinheit abgegebenen Stromstärke bzw. die Amplitude der Schwankungen der im AS-i-Bus fließenden Stromstärke zu ermitteln imstande ist.

Vorteilhaft hierbei ist, daß von vornherein durch den zeitlich variablen Anteil des von der Stromversorgungseinheit abgegebenen Stromes bzw. des im AS-i-Bus fließenden Stromes an die Überwachungseinrichtung gelangt, während der zeitlich konstante Anteil des Stromes ohne Einfluß auf die erfindungsgemäße Erkennung der Überlagerung zweier Antwortsignale bleibt. Auf diese Weise wird nicht nur die relative Genauigkeit der Erkennung verbessert, sondern es wird auch der Einfluß einer eventuellen langsamen, z.B. temperaturbedingten Drift des konstanten Anteils des Stromes vermieden.

Weitere Vorteile der letztgenannten Variante der Erfindung bestehen in der galvanischen Trennung zwischen den Strömen, welche durch die erste bzw. durch die zweite Wicklung fließen sowie in dem Umstand, daß aufgrund der induktiven Auskopplung kein Widerstand in dem AS-i-Bus oder zwischen diesem und der Stromversorgungseinheit zwischengeschaltet werden muß, wodurch ein entsprechender Spannungsabfall innerhalb des Aktuator-Sensor-Interface-Systems sowie ein Verbrauch der entsprechenden Verlustleistung vermieden werden. Da in der Praxis ein Stromverbrauch des Aktuator-Sensor-Interface-Systems von 8 bis 10A keine Seltenheit ist, ist der letztgenannte Vorteil in vielen Fällen von erheblicher Relevanz.

Gemäß einer weiteren vorteilhaften Variante des erfindungsgemäßen Verfahrens wird während jeder Sendepause das Auftreten von Antwortimpulsen erfaßt und, falls solche innerhalb einer Sendepause ausbleiben, die zuletzt erkannte Adresse eines Slaves angezeigt und/oder gespeichert. Zu diesem Zweck kann insbesondere die Sendesignal-Dekodiereinrichtung imstande sein, während jeder Sendepause das Auftreten von Antwortimpulsen zu erfassen und, falls solche innerhalb einer Sendepause ausbleiben, die zuletzt erkannte Adresse eines Slaves anzuzeigen und/oder zu speichern.

Es kann ferner ein Fehlersignal ausgelöst werden, falls innerhalb einer Sendepause Antwortimpulse ausbleiben. Hierzu kann die Sendesignal-Dekodiereinrichtung so eingerichtet sein, daß sie in dem Fall, daß innerhalb einer Sendepause Antwortimpulse ausbleiben, ein Fehlersignal auszulösen imstande sein.

Auf diese Weise ist seinfach feststellbar, welche der gesendeten Adressen keinen Slave aufgerufen hat, d.h. welche der für die Slaves vorgesehenen Adressen womöglich irrtümlich nicht vergeben worden ist. Der betreffende Slave kann in diesem Fall z.B. ausgetauscht oder mit der korrekten Adresse versehen werden.

Beispielsweise kann das Aktuator-Sensor-Interface-System 31 Slaves aufweisen, die nacheinander durch ihre jeweiligen Adressen entsprechende Folgen von Sendeimpulsen angesprochen werden, wobei folgende Reaktionen erfolgt seien:
- Die Slaves Nr. 1 bis Nr. 11 haben korrekt geantwortet,
- beim Aufruf des Slaves Nr. 12 haben zwei Slaves zugleich geantwortet, wodurch das Schalt- oder Warnsignal ausgelöst wurde und die Adresse des Slaves Nr. 12 angezeigt und gespeichert wird,
- die Slaves Nr. 13 bis Nr. 15 haben korrekt geantwortet,
- beim Aufruf des Slaves Nr. 16 erfolgte keine Antwort, wodurch das Fehlersignal ausgelöst wurde und die Adresse des Slaves Nr. 16 angezeigt und gespeichert wird, und
- die Slaves Nr. 17 bis Nr. 31 haben korrekt geantwortet Aus den angezeigten bzw. gespeicherten Informationen geht nun erfindungsgermäß hervor, daß die Slaves Nr. 12 und Nr. 16 dieselbe binäre Adresse besitzen, was eine Korrektur durch einen einzigen gezielten Eingriff, z.B. Austausch des Slaves Nr. 16, ermöglicht.

Die Stromversorgungseinheit kann eine Stromquelle sowie eine Datenentkopplung umfassen, wobei die Datenentkopplung zwischen die Stromquelle und den AS-i-Bus zwischengeschaltet ist. Die Stromversorgungseinheit und die Überwachungseinrichtung können in einem gemeinsamen Gehäuse angeordnet sein. Ebenso können die Sendesignal-Dekodiereinrichtung und die Überwachungseinrichtung in einem gemeinsamen Gehäuse angeordnet sein.

Bei Verwendung von Repeatern bzw. Extendern kann eine segmentweise AS-Interface Analyse von Vorteil sein, so dass die Erfindung auf zwei durch einen Repeater oder Extender getrennte Gruppen von Slaves jeweils separat angewendet werden kann.

Zur Erkennung von Mehrfachadressierungen von Slaves wird der Sendestrom der AS-Interface Slaves herangezogen, welcher beim Antworten aus der Stromversorgungseinheit gezogen wird. Nur dieser tritt unabhängig von der Topologie des AS-Interface Netzwerkes eindeutig in etwa doppelter Amplitude nach der Datenentkopplung des AS-Interface Netzteils auf, die Spannungsamplituden der Teilnehmer sind dagegen von der örtlichen Verteilung der AS- Interface Slaves sowie der Gesamttopologie des AS-Interface, auf Grund der Impedanzverteilung aller Teilnehmer sowie der AS-Interface Leitungsimpedanz selbst, abhängig und damit uneindeutig. Durch eine galvanisch von AS-Interface getrennte, möglichst rückwirkungsfreie induktive Messung nach dem Stromzangenprinzip kann der Sendestrom aller Teilnehmer, typischerweise ca. 60mA/Slave, am AS-Interface direkt nach der Datenentkopplung ermittelt werden.

Eine Strommessung über einen in die AS-Interface Leitung einzufügenden Shunt führt zu unerwünschten DC-Spannungsabfällen im worst-case Fall (DC-Strom bis derzeit 8A möglich) sowie entsprechend zu dimensionierenden großen Verlustleistungen des Shunt. Für die Erkennung der Doppeladressierung ist jedoch nur der AC-Sendestrom der AS-Interface Slaves relevant und nicht der DC-Stromverbrauch aller angeschlossenen Teilnehmer und Verbraucher, Sensoren, Aktuatoren.

Durch Gewinnung eines eindeutigen Signals aus der Sendestromüberhöhung (z.B. 60...120mA) bei Doppeladressierungen von AS-Interface Slaves kann dieses in einfachster Weise visuell dargestellt werden, z. B. durch LED. Durch eine zusätzliche logische Auswertung des vorangegangenen Masteraufrufes an die doppelt vorhandenen AS-Interface Slaveadresse kann diese Slaveadresse ermittelt und angezeigt werden. Weiterhin können mittels dieser logischen Auswertung weitere Kommunikations-Parameter (Slave-Profil, Data-Exchange) ermittelt werden.

Die Datenentkopplung kann durch die Möglichkeit der Strommessung und einer zusätzlichen logischen Auswertung erweitert werden, die getrennt von der Spannungsquelle, entweder in hoher Schutzart oder niederer Schutzart, ausgeführt werden kann. Die Datenentkopplung erweitert durch die Möglichkeit der Strommessung und einer zusätzlichen logischen Auswertung kann erfindungsgemäß in ein eigenes Gehäuse, zusammen mit dem AS-Interface Master, zusammen mit einem AS-Interface Netzteil, zusammen mit einem AS-Interface Repeater), zusammen mit einem AS-Interface Extender oder zusammen mit einem AS-Interface Erdschlusswächter eingesetzt werden.

Es besteht die Möglichkeit mehrere AS-Interface Kreise in hoher Schutzart über eine Spannungsquelle und mehrere Datenentkopplungen, jeweils erweitert durch die Möglichkeit der Strommessung und einer zusätzlichen logischen Auswertung, in hoher Schutzart mit Spannung zu versorgen.

Damit ermöglicht das Verfahren, dass die Vorrichtung die Vorteile von AS-Interface wie geringe Kosten pro AS-Interface Slave in hoher Schutzart, mit einfacher Verdrahtung in hoher Schutzart, wobei die Erfindung die Erkennung von Mehrfachadressierungen von AS-Interface Slaves ermöglicht. Die Datenentkopplung wird durch die Möglichkeit einer Strommessung und einer zusätzlichen logischen Auswertung der Informationen auf dem AS-Interface erweitert und getrennt von der Spannungsquelle in hoher Schutzart aufgebaut, wodurch die Spannungsquelle auch in einfacher Schutzart räumlich getrennt von der Datenentkopplung in hoher Schutzart einfacher aufgebaut sein kann. Die Datenentkopplung, einschließlich der Strommessung und logischen Auswertung, können in einem eigenen Gehäuse in hoher Schutzart getrennt von der Spannungsquelle aufgebaut werden. Die Datenentkopplung inclusiv der Strommessung und logischen Auswertung können auch zusammen mit einem AS-Interface Netzteil in hoher Schutzart getrennt von der Spannungsquelle aufgebaut werden.

Es können auch zwei Datenentkopplungen inclusiv der Strommessung und logischen Auswertung zusammen mit einem AS-Interface Repeater in hoher Schutzart getrennt von der Spannungsquelle aufgebaut werden. Ebenso kann die Datenentkopplung inclusiv der Strommessung und logischen Auswertung zusammen mit einem AS-Interface Extender in hoher Schutzart getrennt von der Spannungsquelle aufgebaut werden. Ebenso ist es möglich, dass die Datenentkopplung inclusiv der Strommessung und logischen Auswertung zusammen mit einem AS-Interface Erdschlusswächter in hoher Schutzart von der Spannungsquelle getrennt werden kann. Die Datenentkopplung inclusiv der Strommessung und der logischen Auswertung kann räumlich getrennt von der Spannungsquelle aufgebaut werden, wodurch eine unempfindliche DC Spannung über eine längere Strecke zwischen der Spannungsquelle und der Datenentkopplung übertragen wird und hinter der Datenentkopplung die bei AS-Interface angegebene maximale Leitungslänge zur Verfügung steht. Die Datenentkopplung inclusiv der Strommessung und logischen Auswertung können auch räumlich getrennt von der Spannungsquelle aufgebaut bzw. integriert in einen AS-Interface Master werden, wodurch eine unempfindliche DC Spannung über eine längere Strecke zwischen der Spannungsquelle und der Datenentkopplung übertragen wird und hinter der Datenentkopplung die bei AS-Interface angegebene maximale Leitungslänge zur Verfügung steht. Mehrere Datenentkopplungen inclusiv der Strommessung und logischen Auswertung können räumlich getrennt von der Spannungsquelle in einem Gehäuse mit höherer Schutzart aufgebaut werden und die Spannungsquelle kann in ein Gehäuse mit niedrigerer Schutzart wie die Datenentkopplungen aufgebaut werden. Der Aufbau der Spannungsquelle in ein Gehäuse mit niedrigerer Schutzart erleichtert die Abgabe der Verlustleistung wesentlich.

Kurzbeschreibung der Zeichnung, in welcher zeigen:
- Fig. 1 eine: Ausführungsform eines erfindungsgemäßen Aktuator-Sensor--Interface-Systems mit einer Stromversorgungseinheit, einem Master, drei Slaves, einem AS-i-Bus und einer Überwachungseinrichtung sowie mit einem Übertrager, dessen eine Wicklung zwischen die Stromver-sorgungseinheit und eine Leitung des AS-i-Busses zwischengeschaltet ist,
- Fig. 2: eine andere Ausführungsform eines erfindungsgemäßen Aktuator-Sensor--Interface-Systems mit einer Stromversorgungseinheit, einem Master, drei Slaves, einem AS-i-Bus und einer Überwachungseinrichtung sowie mit einem Widerstand, welcher zwischen die Stromversorgungseinheit und eine Leitung des AS-i-Busses zwischengeschaltet ist,
- Fig. 3: eine weitere Ausführungsform eines erfindungsgemäßen Aktuator-Sensor--Interface-Systems mit einer Stromversorgungseinheit, einem Master, drei Slaves, einem AS-i-Bus und einer Überwachungseinrichtung sowie mit einem Übertrager, dessen eine Wicklung in einer Leitung des AS-i-Busses zwischengeschaltet ist,
- Fig. 4: eine weitere Ausführungsform eines erfindungsgemäßen Aktuator-Sensor--Interface-Systems mit einer Stromversorgungseinheit, einem Master, drei Slaves, einem AS-i-Bus und einer Überwachungseinrichtung sowie mit einem Übertrager, dessen eine Wicklung in einer Leitung des AS-i-Busses zwischengeschaltet ist,
- Fig. 5: ein weiteres Beispiel für ein AS-Interface Netzteil gemäß der Erfindung,
- Fig. 6: ein Beispiel für eine Spannungsquelle und eine Datenentkopplung in jeweils getrennten Gehäusen gemäß der Erfindung,
- Fig. 7: ein Beispiel für mehrere AS-Interface Kreise die gemäß der Erfindung in niederer Schutzart aus einem AS-Interface Netzteil mit Spannung versorgt werden,
- Fig. 8: ein Beispiel für mehrere AS-Interface Kreise die gemäß der Erfindung in hoher Schutzart aus einem AS-Interface Netzteil mit Spannung versorgt werden,
- Fig. 9: ein Beispiel für einen AS-Interface Kreis mit zwei Datenentkopplungen und einem Repeater gemäß der Erfindung,
- Fig. 10: ein Beispiel für einen AS-Interface Kreis mit einer Datenentkopplung und einem Extender gemäß der Erfindung und,
- Fig. 11: ein Beispiel für einen AS-Interface Kreis mit einer Datenentkopplung und einem Erdschlusswächter gemäß der Erfindung.

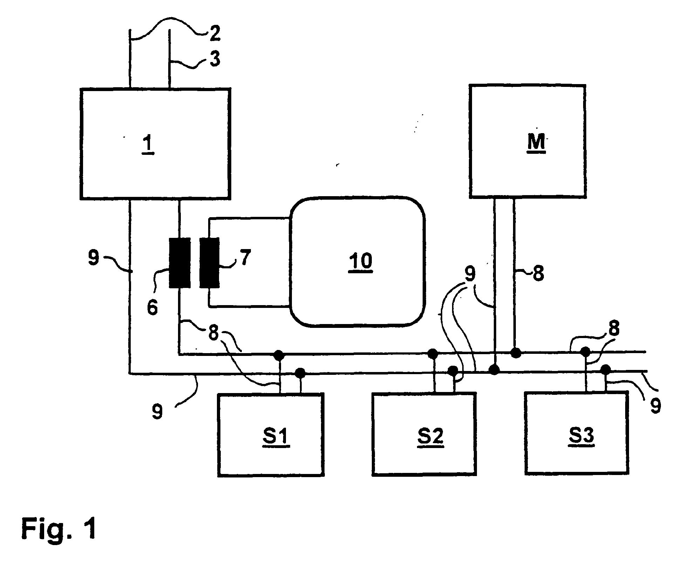

Fig. 1 zeigt eine Ausführungsform eines erfindungsgemäßen Aktuator-Sensor-Interface-Systems mit einer Stromversorgungseinheit 1, einem Master M, drei Slaves S1,S2,S3, einem AS-i-Bus 8,9 und einer Überwachungseinrichtung 10 sowie mit einem Übertrager 6,7, dessen eine Wicklung 6 zwischen die Stromversorgungseinheit 1 und eine Leitung 8 des AS-i-Busses 8,9 zwischengeschaltet ist. Der AS-i-Bus besteht aus zwei jeweils mehrfach verzweigten Leitungen 8,9, die an den Ausgang der Stromversorgungseinheit 1, an die Slaves S1,S2,S3 bzw. an den Master 1 angeschlossen sind. Die Stromversorgungseinheit 1 bezieht über Primärleitungen 2, 3 Energie und versorgt die Slaves S1,S2,S3 und den Master M über den AS-i-Bus 8,9 mit Strom.

Jeder Slave S1,S2,S3 besitzt eine binäre Adresse und ist durch Aufmodulieren einer solchen Folge von Sendeimpulsen auf den AS-i-Bus 8,9, welche der binären Adresse des Slaves entspricht, aufrufbar. Die Erzeügung der Sendeimpulse kann insbesondere durch den Master 1 erfolgen; alternativ hierzu kann ein eigenes Adressiergerät, welches z.B. vorübergehend zu Kontrollzwecken an den AS-i-Bus 8,9 angeschlossen wird, verwendet werden. Der aufgerufene Slave gibt als Reaktion auf den Aufruf ein Antwortsignal ab, indem er eine Folge von Antwortimpulsen auf den AS-i-Bus 8,9 aufmoduliert, indem aus der Stromversorgungseinheit 1 ein entsprechend höherer Strom, Sendestrom, gezogen wird.

In zyklischer Abfolge werden nacheinander so viele verschiedene Folgen von Sendeimpulsen auf den AS-i-Bus 8,9 aufmoduliert, wie das Aktuator-Sensor-Interface-System Slaves aufweist. Zwischen je zwei Folgen von Sendeimpulsen wird eine Sendepause eingehalten, in welcher kein Aufmodulieren von Sendeimpulsen auf den AS-i-Bus 8,9 erfolgt. Die Sendepausen dienen dazu, einen ungestörten Empfang der Antwortsignale durch den Master 1 zu ermöglichen.

Der von der Stromversorgungseinheit 1 abgegebene Strom wird somit durch das Aufmodulieren der Antwortimpulse auf den AS-i-Bus 8,9 verändert. Die durch einen Antwortimpuls ausgelöste Stromänderung beträgt typischerweise z.B. 60mA. Bei Überlagerung zweier Antwortimpulse steigt diese Stromänderung auf typischerweise etwa das Doppelte dieses Wertes, d.h. auf typischerweise z.B. 120mA. Die Schwankungen, welchen der von der Stromversorgungseinheit 1 abgegebene Strom unterworfen ist, werden zum Zwecke der Erkennung einer Überlagerung der Antwortsignale zweier oder mehrerer Slaves herangezogen.

Der Übertrager 6,7, der eine erste und zweite Wicklung 6, 7 besitzt, dient dazu, die durch die Antwortimpulse hervorgerufenen Stromänderungen der Überwachungseinrichtung 10 zuzuführen. Zu diesem Zweck ist die erste Wicklung 6 des Übertragers 6,7 zwischen der Stromversorgungseinheit 1 und einer Leitung 8 des AS-i-Busses 8,9 zwischengeschaltet, so daß die Schwankungen der von der zweiten Wicklung 7 abgegebenen Spannung ein Maß für die Schwankungen der von der Stromversorgungseinheit 1 abgegebenen Stromstärke sind.

Die Überwachungseinrichtung 10 erfaßt somit die durch die Antwortimpulse verursachten Stromschwankungen, vergleicht deren Amplitude mit einem vorgegebenen Schwellenwert und löst ein Schalt- oder Warnsignal aus, falls der Schwellenwert überschritten wird. Der Schwellenwert ist so gewählt, daß dann, wenn ein einzelner Slave ein Antwortsignal abgibt, der Schwellenwert nicht überschritten wird, und dann, wenn sich die Antwortsignale zweier oder mehrerer Slaves überlagern, der Schwellenwert überschritten wird.

Falls die typische Amplitude der Stromschwankung, welche durch einen einzelnen Antwortimpuls verursacht wird, z.B. bei 60mA liegt, kann der Schwellenwert z.B. so gewählt werden, daß bei einer Amplitude der Stromschwankung von 65mA das Schalt- oder Warnsignal ausgelöst wird.

Falls irrtümlich zwei oder mehrere Slaves dieselbe binäre Adresse besitzen, werden diese durch dieselbe Folge von Sendeimpulsen gleichzeitig aufgerufen mit der Konsequenz, daß die gleichzeitig aufgerufenen Slaves gleichzeitig ihr Antwortsignal abgeben. Daher überlagern sich deren Antwortsignale. Bei Überlagerung der Antwortsignale zweier Slaves ergibt sich in diesem Fall eine Amplitude der Stromschwankung von ca. 120mA, so daß der Schwellenwert überschritten und erfindungsgemäß das Schalt- oder Warnsignals auslöst.

Das Schalt- oder Warnsignal wird somit erfindungsgemäß ausgelöst, falls wenigstens zwei Slaves dieselbe binäre Adresse besitzen, diese Slaves durch eine Folge, insbesondere ein- und dieselbe Folge, von Sendeimpulsen gleichzeitig zur Abgabe je eines Antwortsignals veranlaßt worden sind und sich diese Antwortsignale überlagern.

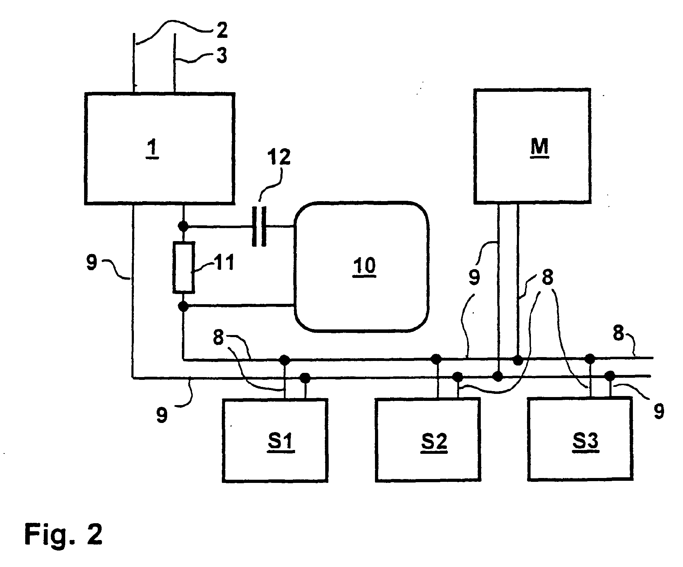

Fig. 2 zeigt eine andere Ausführungsform eines erfindungsgemäßen Aktuator-Sensor-Interface-Systems mit der Stromversorgungseinheit 1, dem Master M, den drei Slaves S1,S2,S3, dem AS-i-Bus 8,9 und mit der Überwachungseinrichtung 10 von Fig. 1 sowie mit einem Widerstand 11, welcher zwischen die Stromversorgungseinheit 1 und die eine Leitung 8 des AS-i-Busses 8,9 zwischengeschaltet ist, so daß der an dem Widerstand 11 erfolgende Spannungsabfall ein Maß für die von der Stromversorgungseinheit 1 abgegebene Stromstärke ist.

Der an dem Widerstand 11 erfolgende Spannungsabfall wird abgegriffen und über einen Kondensator 12 der Überwachungseinrichtung 10 zugeführt. Der Kondensator 12 wirkt als Sperre für den zeitlich konstanten Anteil der abgegriffenen Spannung, so daß nur Spannungsschwankungen an die Überwachungseinheit 10 gelangen.

Diese erfaßt somit die Schwankungen des Spannungsabfalls, vergleicht deren Amplitude mit einem vorgegebenen Schwellenwert und löst ein Schalt- oder Warnsignal aus, falls der Schwellenwert überschritten wird. Der Schwellenwert ist so gewählt, daß dann, wenn ein einzelner Slave ein Antwortsignal abgibt, der Schwellenwert nicht überschritten wird, und dann, wenn sich die Antwortsignale zweier oder mehrerer Slaves überlagern, der Schwellenwert überschritten wird.

Das Schalt- oder Warnsignal wird somit erfindungsgemäß ausgelöst, falls wenigstens zwei Slaves dieselbe binäre Adresse besitzen, diese Slaves durch eine Folge, insbesondere ein- und dieselbe Folge, von Sendeimpulsen gleichzeitig zur Abgabe je eines Antwortsignals veranlaßt worden sind und sich diese Antwortsignale überlagern.

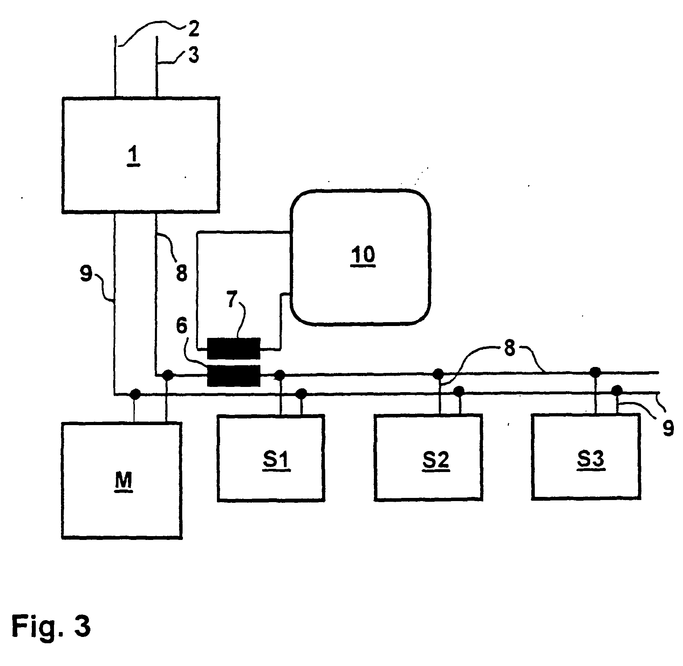

Fig. 3 zeigt eine weitere Ausführungsform eines erfindungsgemäßen Aktuator-Sensor-Interface-Systems mit der Stromversorgungseinheit 1, dem Master M, den drei Slaves S1,S2,S3, dem AS-i-Bus 8,9, dem Übertrager 6,7 und der Überwachungseinrichtung 10. Die Topologie der Schaltung ist gegenüber Fig. 1 verändert. Ausgehend von der Stromversorgungseinheit 1 sind entlang des AS-i-Busses 8,9 zunächst der Master M und danach die Slaves S1,S2,S3 an den AS-i-Bus angeschlossen.

Der im AS-i-Bus fließende Strom wird durch das Aufmodulieren der Antwortimpulse auf den AS-i-Bus verändert. Die erste Wicklung 6 des Übertragers 6,7 ist in der Ausführungsform von Fig. 3 zwischen dem Master M dem Slave S1 in der Leitung 8 des AS-i-Busses 8,9 zwischengeschaltet, so daß die Schwankungen der von der zweiten Wicklung 7 abgegebenen Spannung ein Maß für die Schwankungen der im AS-i-Bus fließenden Stromstärke sind. Die durch einen Antwortimpuls ausgelöste Stromänderung im AS-i-Bus ist ca. halb so groß wie diejenige Stromänderung im AS-i-Bus, welche bei Überlagerung zweier Antwortimpulse auftritt. Die Schwankungen, welchen der im AS-i-Bus fließende Strom unterworfen ist, wird erfindungsgemäß zum Zwecke der Erkennung einer Überlagerung der Antwortsignale zweier oder mehrerer Slaves herangezogen.

Die von der zweiten Wicklung 7 abgegebene Spannung wird der Überwachungseinrichtung 10 zugeführt. Diese erfaßt die von der zweiten Wicklung 7 abgegebene Spannung und ermittelt aus deren zeitlichem Verhalten die Amplitude der Schwankungen der im AS-i-Bus fließenden Stromstärke.

Die Überwachungseinrichtung 10 erfaßt somit die durch die Antwortimpulse verursachten Stromschwankungen im AS-i-Bus, vergleicht deren Amplitude mit einem vorgegebenen Schwellenwert und löst ein Schalt- oder Warnsignal aus, falls der Schwellenwert überschritten wird. Der Schwellenwert ist so gewählt, daß dann, wenn ein einzelner Slave ein Antwortsignal abgibt, der Schwellenwert nicht überschritten wird, und dann, wenn sich die Antwortsignale zweier Slaves überlagern, der Schwellenwert überschritten wird.

Das Schalt- oder Warnsignal wird somit erfindungsgemäß ausgelöst, falls wenigstens zwei Slaves dieselbe binäre Adresse besitzen, diese Slaves durch eine Folge, insbesondere ein- und dieselbe Folge, von Sendeimpulsen gleichzeitig zur Abgabe je eines Antwortsignals veranlaßt worden sind und sich diese Antwortsignale überlagern.

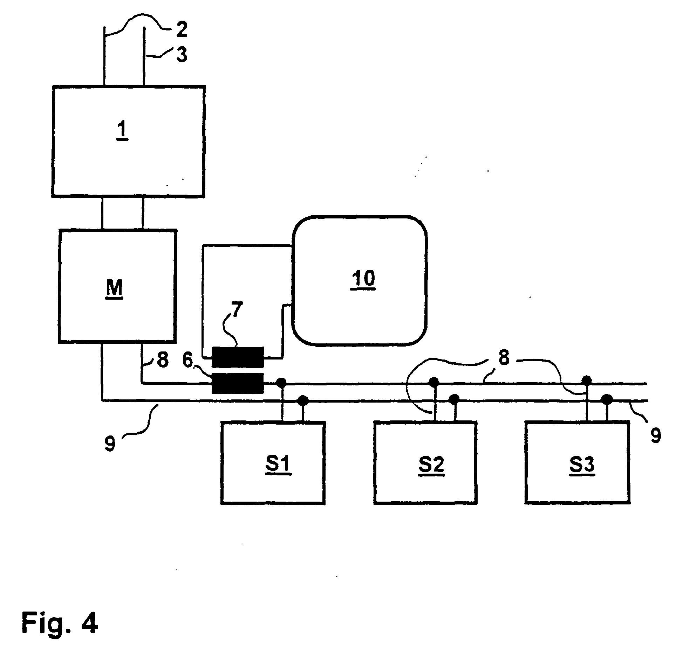

Fig. 4 zeigt eine weitere Ausführungsform eines erfindungsgemäßen Aktuator-Sensor-Interface-Systems mit der Stromversorgungseinheit 1, dem Master M, den drei Slaves S1,S2,S3, dem AS-i-Bus 8,9, dem Übertrager 6,7 und der Überwachungseinrichtung 10. Die Topologie der Schaltung ist gegenüber Fig. 3 verändert. Der Master M ist im zwischen die Stromversorgungseinheit 1 und den AS-i-Bus 8,9 zwischengeschaltet und enthält eine nicht dargestellte Datenentkopplung.

Die erste Wicklung 6 des Übertragers 6,7 ist in der Ausführungsform von Fig. 4 zwischen dem Master M dem Slave S1 in der Leitung 8 des AS-i-Busses 8,9 zwischengeschaltet, so daß die Schwankungen der von der zweiten Wicklung 7 abgegebenen Spannung ein Maß für die Schwankungen der im AS-i-Bus fließenden Stromstärke sind. Die Schwankungen, welchen der im AS-i-Bus fließende Strom unterworfen ist, wird erfindungsgemäß zum Zwecke der Erkennung einer Überlagerung der Antwortsignale zweier oder mehrerer Slaves herangezogen.

Die Überwachungseinrichtung 10 erfaßt die von der zweiten Wicklung 7 abgegebene Spannung und ermittelt aus deren zeitlichem Verhalten die Amplitude der Schwankungen der im AS-i-Bus fließenden Stromstärke. Die Überwachungseinrichtung 10 erfaßt die durch die Antwortimpulse verursachten Stromschwankungen im AS-i-Bus, vergleicht deren Amplitude mit einem vorgegebenen Schwellenwert und löst das Schalt- oder Warnsignal aus, falls der Schwellenwert überschritten wird. Der Schwellenwert ist so gewählt, daß dann, wenn ein einzelner Slave ein Antwortsignal abgibt, der Schwellenwert nicht überschritten wird, und dann, wenn sich die Antwortsignale zweier oder mehrerer Slaves überlagern, der Schwellenwert überschritten wird. Das Schaltoder Warnsignal wird somit ausgelöst, falls wenigstens zwei Slaves dieselbe binäre Adresse besitzen, diese Slaves durch eine Folge, insbesondere ein- und dieselbe Folge, von Sendeimpulsen gleichzeitig zur Abgabe je eines Antwortsignals veranlaßt worden sind und sich diese Antwortsignale überlagern.

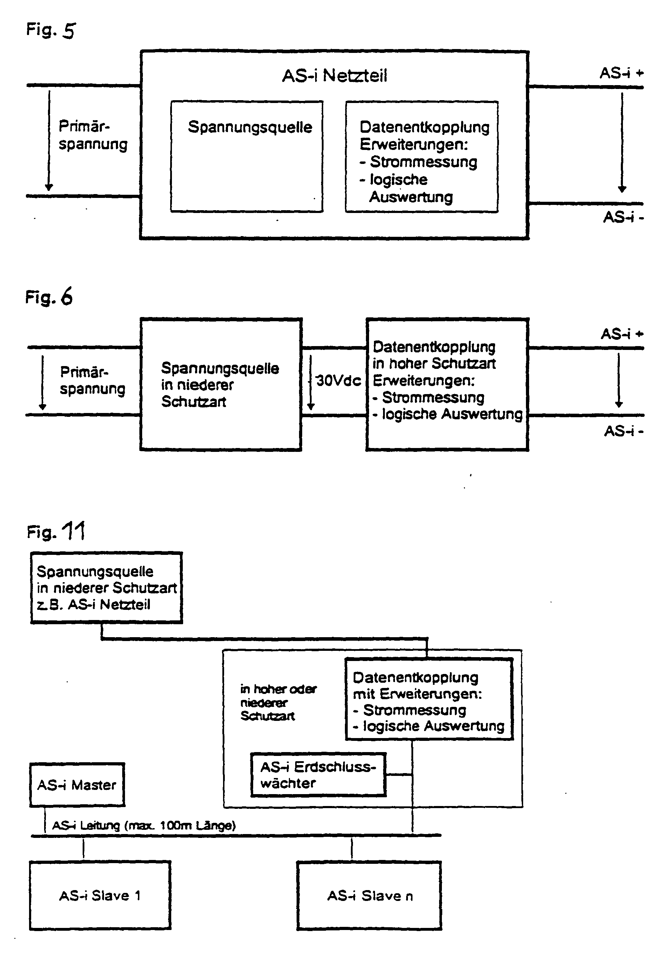

Figur 5 zeigt ein weiteres Beispiel für ein AS-Interface Netzteil gemäß der Erfindung.

Figur 6 zeigt ein Beispiel für eine Spannungsquelle in niederer Schutzart, zum Beispiel 30 V DC sowie eine Datenentkopplung in jeweils getrennten Gehäusen, wobei die Datenentkopplung in hoher Schutzart ausgeführt ist.

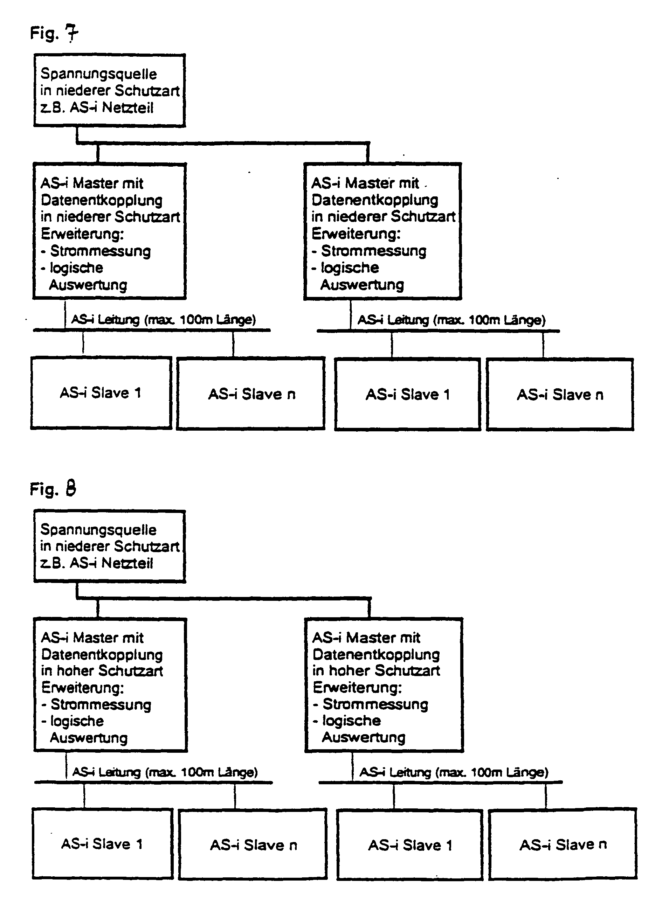

Figur 7 zeigt ein Beispiel für zwei AS-Interface Kreise, welche über zwei getrennte Datenentkopplungen gemäß der Erfindung verfügen, integriert in die AS-Interface Master in niederer Schutzart und von einer Spannungsquelle in niederer Schutzart mit Spannung versorgt werden.

Figur 8 ist ein Beispiel für zwei AS-Interface Kreise, welche über zwei getrennte Datenentkopplungen gemäß der Erfindung versäumt werden, integriert in die AS-Interface Master in hoher Schutzart und versorgt von einer Spannungsquelle mit Spannung in niederer Schutzart, welche zum Beispiel das AS-i-Netzteil darstellt.

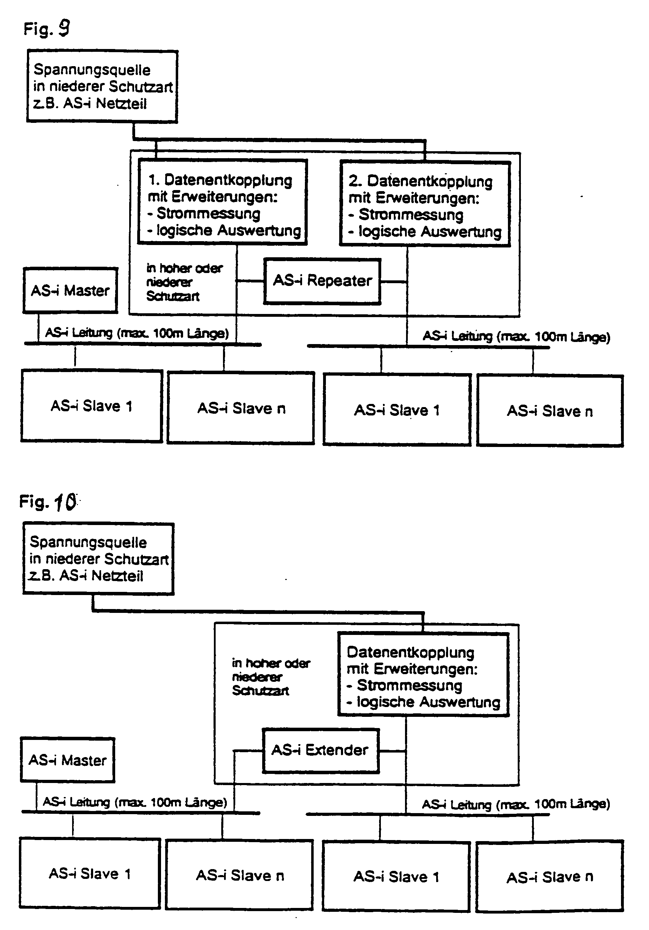

Figur 9 zeigt ein Beispiel für einen AS-Interface Kreis mit zwei Datenentkopplungen gemäß der Erfindung und einem Repeater, welche zusammen in hoher oder in niederer Schutzart aufgebaut sind, weil beide Möglichkeiten gegeben sind.

Figur 10 zeigt ein Beispiel für einen AS-Interface Kreis mit einer Datenentkopplung gemäß der Erfindung und einem Extender, welche zusammen in hoher oder niederer Schutzart aufgebaut sind, wobei die Datenentkopplung wiederum - wie auch in Figur 9- mit den Erweiterungen Strommessung und logischer Auswertung ausgerüstet sein kann.

Figur 11 zeigt ein weiteres Beispiel eines AS-Interface Kreises mit einer Datenentkopplung mit den Erweiterungen Strommessung und logische Auswertung und einem AS-i-Erdschlusswächter, welcher an die Datenentkopplung angeschlossen ist, wobei Datenentkopplung und Erdschlusswächter zusammen in hoher oder niederer Schutzart aufgebaut sein können und der Erdschlusswächter ebenfalls auf den AS-i-Bus gelegt ist.

Wenn ein AS-i-Bus über dessen normale AS-i-Leitungslänge, cirka 100 m, hinaus zur Anwendung gelangen soll, so werden in diesem Fall wenigstens ein oder auch mehrere Repeater, insbesondere zwei in Reihe geschaltete Repeater, in den AS-i-Bus eingefügt, wobei die Anzahl der Repeater der Anzahl der Leitungssegmente entspricht. Der AS-i-Bus wird somit aus einer Anzahl von Leitungssegmenten mit bestimmten AS-i-Leitungslängen aufgebaut, welche für sich jeweils die AS-i-Anforderungen erfüllen. Jedes Leitungssegment erhält ein eigenes Netzteil, welches im Prinzip eine galvanische Entkopplung der einzelnen AS-i-Leitungssegmente bewirkt und damit auch eine Datenentkopplung durchführt. In diesem Fall muß somit die Erfindung für jedes AS-i- Leitungssegment durchgeführt und angewendet werden. Bei Einsatz eines AS-i-Busses über dessen normale AS-i-Leitungslänge gemäß den AS-i-Vorgaben hinaus wird somit der AS-i-Bus in eine Anzahl von Leitungssegmente aufgeteilt, welche für sich genommen den AS-i-Anforderungen entsprechen, wobei in jedes Leitungssegment ein Repeater mit einem eigenen Netzteil eingefügt ist. Mittels eines jeden Repeaters wird nun für jedes Leitungssegment das erfindungsgemäße Verfahren durchgeführt, indem die Antwortimpulse durch eine Überwachungseinrichtung erfaßt werden, welche bei Überlagerung der Antwortsignale zweier oder mehrerer Slaves ein Schalt- oder Warnsignal auslöst, so daß dasselbe ausgelöst wird, falls zwei oder mehrere Slaves dieselbe binäre Adresse besitzen, diese Slaves durch eine Folge, insbesondere ein- und dieselbe Folge, von Sendeimpulsen gleichzeitig zur Abgabe je eines Antwortsignals veranlaßt werden und sich diese Antwortsignale überlagern.

### Gewerbliche Anwendbarkeit:

Der Gegenstand der Erfindung dient insbesondere der eindeutigen Diagnosefähigkeit der Mehrfachadressierung durch Fehladressierungen von AS-Interface Slaves bei der Inbetriebnahme, Wartung und Instandsetzung für Bussysteme nach dem AS-Interface Standard zur Steuerung und Aktivierung von miteinander vernetzten und kommunizierenden binären, Mehrfachmodulen, AS-Interface Slaves, wobei hierdurch insbesondere die Stillstandszeiten der Anlagen während Wartung und Instandsetzung drastisch verkürzt und damit die Verfügbarkeit der Gesamtanlage wesentlich erhöht wird. Die Datenentkopplung erweitert durch die Möglichkeit der Strommessung und einer zusätzlichen logischen Auswertung getrennt von der Spannungsquelle in hoher Schutzart, wodurch die Spannungsquelle in einfacher Schutzart räumlich getrennt von der Datenentkopplung in niederer bzw. hoher Schutzart einfacher aufgebaut sein kann und die Verlustleistung einfacher abgegeben werden kann.

### Liste der Bezugszeichen:

- 1: Stromversorgungseinheit
- 2,3: Primärleitungen
- 6, 7: erste, zweite Wicklung
- 8,9: AS-i-Bus-Leitungen
- 10: Überwachungseinrichtung
- 11: Widerstand
- 12: Kondensator
- M: Master
- S1, S2, S3: Slaves

## Patentansprüche

1. Aktuator-Sensor-Interface-System, umfassend mindestens zwei Slaves (S1,S2,S3), einen Master (M), einen Aktuator-Sensor-Interface-Bus (8,9), AS-i-Bus (8,9), an welchen die Slaves (S1,S2,S3) und der Master (M) angeschlossen sind, sowie eine Stromversorgungseinheit (1), welche die Slaves (S1,S2,S3) über den ASi-Bus (8,9) mit Strom zu versorgen imstande ist, wobei jeder Slave (S1,S2,S3) eine binäre Adresse besitzt und durch Aufmodulieren einer solchen Folge von Sendeimpulsen auf den AS-i-Bus (8,9), welche der binären Adresse des Slaves (S1,S2,S3) entspricht, aufrufbar und zur Abgabe eines Antwortsignals veranlaßbar ist, welches aus einer durch den aufgerufenen Slave (S1,S2,S3) auf den AS-i-Bus (8,9) aufmodulierten Folge von Antwortimpulsen besteht, **gekennzeichnet durch**
eine Überwachungseinrichtung (10), welche die Antwortimpulse zu erfassen imstande ist und bei Überlagerung der Antwortsignale mindestens zweier Slaves (S1,S2,S3) ein Schalt- oder Warnsignal auslöst, so daß dasselbe ausgelöst wird, falls wenigstens zwei Slaves (S1,S2,S3) dieselbe binäre Adresse besitzen, diese Slaves (S1,S2,S3) **durch** eine Folge von Sendeimpulsen gleichzeitig zur Abgabe je ihres Antwortsignals veranlaßt worden sind und sich diese Antwortsignale überlagern.

2. Aktuator-Sensor-Interface-System nach Anspruch 1, **dadurch gekennzeichnet, daß** dasselbe imstande ist,
- in zyklischer Abfolge so viele verschiedene Folgen von Sendeimpulsen auf den AS-i-Bus (8,9) aufzumodulieren, wie das Aktuator-Sensor-Interface-System Slaves (S1,S2,S3) aufweist, und
- zwischen je zwei Folgen von Sendeimpulsen eine Sendepause einzuhalten, in welcher kein Aufmodulieren von Sendeimpulsen auf den AS-i-Bus (8,9) erfolgt.

3. Aktuator-Sensor-Interface-System nach Anspruch 1 oder 2,
**dadurch gekennzeichnet, daß** die Überwachungseinrichtung (10) imstande ist, eine Überlagerung zweier Antwortsignale daran zu erkennen, daß die Amplitude der Schwankungen der von der Stromversorgungseinheit (1) abgegebenen oder der im AS-i-Bus (8,9) fließenden Stromstärke einen vorgegebenen Schwellenwert übersteigt.

4. Aktuator-Sensor-Interface-System nach Anspruch 3, **dadurch gekennzeichnet,**
**daß** der Schwellenwert größer ist als der einfache Sendestrom eines Slaves und kleiner ist als der zweifache Sendestrom eines Slaves.

5. Aktuator-Sensor-Interface-System nach Anspruch 3, **dadurch gekennzeichnet,**
**daß** der Schwellenwert größer ist als die maximale Amplitude derjenigen Schwankungen, mit welchen die von der Stromversorgungseinheit (1) abgegebene Stromstärke oder die im AS-i-Bus (8,9) fließende Stromstärke behaftet ist und welche dadurch verursacht werden, daß ein Slave (S1,S2,S3) ein Antwortsignal abgibt, und kleiner ist als das Doppelte dieser Amplitude.

6. Aktuator-Sensor-Interface-System nach einem der Ansprüche 1 bis 5,
**gekennzeichnet durch** eine Sendesignal-Dekodiereinrichtung, welche die Sendeimpulse zu erfassen imstande ist und in jeder Folge von Sendeimpulsen, welche einer binären Adresse eines Slaves (S1,S2,S3) entspricht, diese Adresse zu erkennen imstande ist.

7. Aktuator-Sensor-Interface-System nach Anspruch 6,
**dadurch gekennzeichnet, daß** die Sendesignal-Dekodiereinrichtung imstande ist, das Schalt- oder Warnsignal zu erfassen und bei Feststellung desselben die zuletzt erkannte Adresse eines Slaves (S1,S2,S3) anzuzeigen und/oder zu speichern.

8. Aktuator-Sensor-Interface-System nach einem der Ansprüche 2 bis 7,
**gekennzeichnet durch** einen Widerstand (11), welcher zwischen der Stromversorgungseinheit (1) und einer Leitung (8,9) des AS-i-Busses (8,9) oder im AS-i-Bus (8,9) zwischengeschaltet ist, so daß der an dem Widerstand (11) erfolgende Spannungsabfall ein Maß für die von der Stromversorgungseinheit (1) abgegebene bzw. für die im AS-i-Bus (8,9) fließende Stromstärke ist, wobei die Überwachungseinrichtung (10)
- entweder diesen Spannungsabfall zu erfassen und hieraus den Betrag der von der Stromversorgungseinheit (1) abgegebenen Stromstärke bzw. den Betrag der im AS-i-Bus (8,9) fließenden Stromstärke,
- oder die Schwankungen dieses Spannungsabfalls zu erfassen und hieraus die Amplitude der Schwankungen der von der Stromversorgungseinheit (1) abgegebenen Stromstärke bzw. die Amplitude der Schwankungen der im AS-i-Bus (8,9) fließenden Stromstärke
zu ermitteln imstande ist.

9. Aktuator-Sensor-Interface-System nach einem der Ansprüche 3 bis 5,
**gekennzeichnet durch** einen Übertrager (6,7) mit einer ersten und einer zweiten Wicklung (6,7), wobei die erste Wicklung (6)
- zwischen der Stromversorgungseinheit (1) und einer Leitung (8,9) des AS-i-Busses (8,9) oder
- in einer Leitung (8,9) des AS-i-Busses (8,9)
zwischengeschaltet ist, so daß die Schwankungen der von der zweiten Wicklung (7) abgegebenen Spannung ein Maß
- für die Schwankungen der von der Stromversorgungseinheit (1) abgegebenen Stromstärke bzw.
- für die Schwankungen der im AS-i-Bus (8,9) fließenden Stromstärke
sind und die Überwachungseinrichtung (10) die von der zweiten Wicklung (7) abgegebene Spannung zu erfassen und aus deren zeitlichem Verhalten
- die Amplitude der Schwankungen der von der Stromversorgungseinheit (1) abgegebenen Stromstärke bzw.
- die Amplitude der Schwankungen der im AS-i-Bus (8,9) fließenden Stromstärke
zu ermitteln imstande ist.

10. Aktuator-Sensor-Interface-System nach Anspruch 2 und einem der Ansprüche 10 oder 11, **dadurch gekennzeichnet, daß** die Sendesignal-Dekodiereinrichtung imstande ist, während jeder Sendepause das Auftreten von Antwortimpulsen zu erfassen und, falls solche innerhalb einer Sendepause ausbleiben, die zuletzt erkannte Adresse eines Slaves (S1,S2,S3) anzuzeigen und/oder zu speichern.

11. Aktuator-Sensor-Interface-System nach Anspruch 10,
**dadurch gekennzeichnet, daß** die Sendesignal-Dekodiereinrichtung in dem Fall, daß innerhalb einer Sendepause Antwortimpulse ausbleiben, ein Fehlersignal auszulösen imstande ist.

12. Aktuator-Sensor-Interface-System nach einem der Ansprüche 1 bis 11,
**dadurch gekennzeichnet, daß** die Stromversorgungseinheit (1) eine Stromquelle sowie eine Datenentkopplung umfaßt, wobei die Datenentkopplung zwischen die Stromquelle und den AS-i-Bus (8,9) zwischengeschaltet ist.

13. Aktuator-Sensor-Interface-System nach einem der Ansprüche 1 bis 12,
**dadurch gekennzeichnet, daß** die Stromversorgungseinheit (1) und die Überwachungseinrichtung (10) sowie gegebenenfalls die Sendesignal-Dekodiereinrichtung und die Überwachungseinrichtung (10) in einem gemeinsamen Gehäuse angeordnet sind.

14. Verfahren zum Betreiben eines Aktuator-Sensor-Interface-Systems, umfassend mindestens zwei Slaves (S1,S2,S3), einen Master (M), einen Aktuator-Sensor-Interface-Bus (8,9), AS-i-Bus (8,9), an welchen die Slaves (S1,S2,S3) und der Master (M) angeschlossen sind, sowie eine Stromversorgungseinheit (1), welche die Slaves (S1,S2,S3) über den AS-i-Bus (8,9) mit Strom zu versorgen imstande ist, wobei jeder Slave (S1,S2,S3) eine binäre Adresse besitzt und durch Aufmodulieren einer solchen Folge von Sendeimpulsen auf den AS-i-Bus (8,9), welche der binären Adresse des Slaves (S1,S2,S3) entspricht, aufrufbar und zur Abgabe eines Antwortsignals veranlaßbar ist, welches aus einer durch den aufgerufenen Slave (S1,S2,S3) auf den AS-i-Bus (8,9) aufmodulierten Folge von Antwortimpulsen besteht, **dadurch gekennzeichnet,**
**daß** die Antwortimpulse durch eine Überwachungseinrichtung (10) erfaßt werden, welche bei Überlagerung der Antwortsignale mindestens zweier Slaves (S1,S2,S3) ein Schalt- oder Warnsignal auslöst, so daß dasselbe ausgelöst wird, falls wenigstens zwei Slaves (S1,S2,S3) dieselbe binäre Adresse besitzen, diese Slaves (S1,S2,S3) durch eine Folge, insbesondere ein- und dieselbe Folge, von Sendeimpulsen gleichzeitig zur Abgabe je eines Antwortsignals veranlaßt werden und sich diese Antwortsignale überlagern.

15. Verfahren nach Anspruch 19, **dadurch gekennzeichnet,**
**daß** in zyklischer Abfolge so viele verschiedene Folgen von Sendeimpulsen auf den AS-i-Bus (8,9) aufmoduliert werden, wie das Aktuator-Sensor-Interface-Svstem Slaves (S1,S2,S3) aufweist, und zwischen je zwei Folgen von Sendeimpulsen eine Sendepause eingehalten wird, in welcher keine Sendeimpulsen auf den AS-i-Bus (8,9) aufmoduliert werden.

16. Verfahren nach Anspruch 14 oder 15, **dadurch gekennzeichnet,**
**daß** als Überwachungseinrichtung (10) eine solche verwendet wird, welche imstande ist, eine Überlagerung zweier Antwortsignale daran zu erkennen, daß die Amplitude der Schwankungen
- der von der Stromversorgungseinheit (1) abgegebenen oder
- der im AS-i-Bus (8,9) fließenden
Stromstärke einen vorgegebenen ersten Schwellenwert übersteigt.

17. Verfahren nach Anspruch 16, **dadurch gekennzeichnet,**
**daß** der Schwellenwert größer gewählt wird als die maximale Amplitude derjenigen Schwankungen, mit welchen die von der Stromversorgungseinheit (1) abgegebene Stromstärke oder die im AS-i-Bus fließende Stromstärke behaftet ist und welche dadurch verursacht werden, daß ein Slave (S1,S2,S3) ein Antwortsignal abgibt, und kleiner gewählt wird als das Doppelte dieser Amplitude.

18. Aktuator-Sensor-Interface-System nach Anspruch 17, **dadurch gekennzeichnet, daß** der Schwellenwert größer gewählt wird als das 1,1-fache der maximalen Amplitude derjenigen Schwankungen, mit welchen die von der Stromversorgungseinheit (1) abgegebene Stromstärke oder die im AS-i-Bus (8,9) fließende Stromstärke behaftet ist und welche dadurch verursacht werden, daß ein Slave (S1,S2,S3) ein Antwortsignal abgibt, und kleiner gewählt wird als das 1,9-fache dieser Amplitude.

19. Verfahren nach einem der Ansprüche 19 bis 27, **dadurch gekennzeichnet, daß** die Sendeimpulse mittels einer Sendesignal-Dekodiereinrichtung erfaßt werden, welche in jeder Folge von Sendeimpulsen, welche einer binären Adresse eines Slaves (S1,S2,S3) entspricht, diese Adresse zu erkennen imstande ist.

20. Verfahren nach Anspruch 19, **dadurch gekennzeichnet,**
**daß** das Schalt- oder Warnsignal erfaßt und bei Feststellung desselben die zuletzt erkannte Adresse eines Slaves (S1,S2,S3) angezeigt und/oder gespeichert wird.

21. Verfahren nach einem der Ansprüche 14 bis 20, **dadurch gekennzeichnet,**
**daß** der an einem zwischen der Stromversorgungseinheit (10) und einer Leitung (8,9) des AS-i-Busses (8,9) oder im AS-i-Bus (8,9) zwischengeschalteten Widerstand (11) erfolgende Spannungsabfall abgegriffen, der Überwachungseinrichtung (10) zugeführt und als ein Maß für die von der Stromversorgungseinheit (1) abgegebene bzw. für die im AS-i-Bus (8,9) fließende Stromstärke ist Stromstärke verwendet wird, wobei entweder aus diesem Spannungsabfall der Betrag der von der Stromversorgungseinheit (1) abgegebenen Stromstärke bzw. der Betrag der im AS-i-Bus (8,9) fließenden Stromstärke,
oder
aus den Schwankungen dieses Spannungsabfalls die Amplitude der Schwankungen der von der Stromversorgungseinheit (1) abgegebenen Stromstärke bzw. die Amplitude der Schwankungen der im AS-i-Bus (8,9) fließenden Stromstärke ermittelt wird.

22. Verfahren nach einem der Ansprüche 14 bis 21, **dadurch gekennzeichnet,**
**daß** ein Übertrager (6,7) mit einer ersten und einer zweiten Wicklung (6,7) verwendet wird, wobei die erste Wicklung (6) zwischen der Stromversorgungseinheit (1) und einer Leitung (8,9) des AS-i-Busses (8,9)
oder
in einer Leitung (8,9) des AS-i-Busses (8,9) zwischengeschaltet ist, und die Schwankungen der von der zweiten Wicklung (7) abgegebenen Spannung als ein Maß für die Schwankungen der von der Stromversorgungseinheit (1) abgegebenen Stromstärke bzw. für die Schwankungen der im AS-i-Bus (8,9) fließenden Stromstärke verwendet werden und aus dem zeitlichen Verhalten der von der zweiten Wicklung (7) abgegebenen Spannung die Amplitude der Schwankungen der von der Stromversorgungseinheit (1) abgegebenen Stromstärke bzw. die Amplitude der Schwankungen der im AS-i-Bus (8,9) fließenden Stromstärke ermittelt werden.

23. Verfahren nach einem der Ansprüche 14 bis 22, **dadurch gekennzeichnet,**
**daß** während jeder Sendepause das Auftreten von Antwortimpulsen erfaßt wird und, falls solche innerhalb einer Sendepause ausbleiben, die zuletzt erkannte Adresse eines Slaves (S1,S2,S3) angezeigt und/oder gespeichert wird.

24. Verfahren nach Anspruch 23, **dadurch gekennzeichnet,**
**daß** ein Fehlersignal ausgelöst wird, falls innerhalb einer Sendepause Antwortimpulse ausbleiben.

25. Verfahren nach einem der vorherigen Ansprüche, **dadurch gekennzeichnet,**
**dass** bei Einsatz eines AS-i-Busses über dessen normale AS-i-Leitungslänge gemäß den AS-i-Vorgaben hinaus der AS-i-Bus in eine Anzahl von Leitungssegmente aufgeteilt wird, welche für sich genommen den AS-i-Anforderungen entsprechen, wobei in jedes Leitungssegment ein Repeater mit einem eigenen Netzteil eingefügt ist, über welchen Repeater das Verfahren gemäß Anspruch 19 durchgeführt wird.

## Claims

1. An actuator-sensor-interface system, comprising at least two slaves (S1,S2,S3), a master (M), an actuator-sensor-interface bus (8,9), AS-i-Bus (8,9), to which the slaves (S1,S2,S3) and the master (M) are connected, as well as a power supply unit (1) that is capable of supplying the slaves (S1,S2,S3) with current via the AS-i-Bus (8,9), whereby each slave (S1,S2,S3) has a binary address and, through the modulation of such a sequence of transmission pulses onto the AS-i-Bus (8,9) that matches the binary address of the slave (S1,S2,S3), can be called and induced to emit a response signal consisting of a sequence of response pulses modulated onto the AS-i-Bus (8,9) by the called slave (S1,S2,S3), **characterized by**
a monitoring device (10) that is capable of detecting the response pulses and that, in case of the superimposition of the response signals of at least two slaves (S1,S2,S3), triggers a switching or warning signal so that said signal is triggered, if at least two slaves (S1,S2,S3) have the same binary address, if these slaves (S1,S2,S3) have each been simultaneously induced by a sequence of transmission pulses to emit their response signal and if these response signals are superimposed.

2. The actuator-sensor-interface system according to Claim 1,
**characterized in that** said system is capable of
- modulating, in a cyclic sequence, as many different sequences of transmission pulses onto the AS-i-Bus (8,9) as the actuator-sensor-interface system has slaves (S1,S2,S3), and
- maintaining a transmission pause between every two sequences of transmission pulses, during which pause no modulation of transmission pulses onto the AS-i-Bus (8,9) takes place.

3. The actuator-sensor-interface system according to Claim 1 or 2,
**characterized in that** the monitoring device (10) is capable of recognizing a superimposition of two response signals by the fact that the amplitude of the fluctuations of the current intensity generated by the power supply unit (1) or the amplitude of the fluctuations of the current intensity flowing in the AS-i-Bus (8,9) exceeds a predefined threshold value.

4. The actuator-sensor-interface system according to Claim 3,
**characterized in that** the threshold value is greater than the simple transmission current of a slave and is smaller than twice the transmission current of a slave.

5. The actuator-sensor-interface system according to Claim 3,
**characterized in that** the threshold value is greater than the maximum amplitude of those fluctuations affecting the current intensity generated by the power supply unit (1) or the current intensity flowing in the AS-i-Bus (8,9), said fluctuations being caused by the fact that a slave (S1,S2,S3) emits a response signal, and it is smaller than twice this amplitude.

6. The actuator-sensor-interface system according to any of Claims 1 to 5,
**characterized by** a transmission signal decoding device that is capable of detecting the transmission pulses and, in each sequence of transmission pulses that matches a binary address of a slave (S1,S2,S3), is capable of recognizing this address.

7. The actuator-sensor-interface system according to Claim 6,
**characterized in that** the transmission signal decoding device is capable of detecting the switching or warning signal and, when said signal is ascertained, it is capable of displaying and/or storing the most recently recognized address of a slave (S1,S2,S3).

8. The actuator-sensor-interface system according to any of Claims 2 to 7,
**characterized by** a resistor (11) that is installed between the power supply unit (1) and a line (8,9) of the AS-i-bus (8,9) or in the AS-i-Bus (8,9), so that the current drop that occurs at the resistor (11) serves as a measure of the current intensity generated by the power supply unit (1) or as a measure of the current intensity flowing in the AS-i-Bus (8,9), whereby the monitoring device (10)
- is either capable of detecting this current drop and, on this basis, of ascertaining the magnitude of the current intensity generated by the power supply unit (1) or the magnitude of the current intensity flowing in the AS-i-Bus (8,9),
- or else it is capable of detecting the fluctuations of this current drop and, on this basis, of ascertaining the amplitude of the fluctuations of the current intensity generated by the power supply unit (1) or the amplitude of the fluctuations of the current intensity flowing in the AS-i-Bus (8,9).

9. The actuator-sensor-interface system according to any of Claims 3 to 5,
**characterized by** a transformer (6,7) having a first and a second winding (6,7), whereby the first winding (6) is installed
- between the power supply unit (1) and a line (8,9) of the AS-i-bus (8,9) or
- in a line (8,9) of the AS-i-bus (8,9)
so that the fluctuations of the voltage generated by the second winding (7) is
- a measure of the fluctuations of the current intensity generated by the power supply unit (1) or
- a measure of the fluctuations of the current intensity flowing AS-i-Bus (8,9),
and the monitoring device (10) is capable of detecting the voltage generated by the second winding (7) and is capable of ascertaining
- the amplitude of the fluctuations of the current intensity generated by the power supply unit (1) or
- the amplitude of the fluctuations of the current intensity flowing in the AS-i-Bus (8,9)
on the basis of its behavior over time.

10. The actuator-sensor-interface system according to Claim 2 and either Claim 10 or 11,
**characterized in that** the transmission signal decoding device is capable of detecting the occurrence of response pulses during each transmission pause and, if they are absent during a transmission pause, of displaying and/or storing the most recently recognized address of a slave (S1,S2,S3).

11. The actuator-sensor-interface system according to Claim 10,
**characterized in that**, if response pulses are absent during a transmission pause, then the transmission signal decoding device is capable of triggering an error signal.

12. The actuator-sensor-interface system according to any of Claims 1 to 11,
**characterized in that** the power supply unit (1) comprises a current source as well as a data decoupling circuit, whereby the data decoupling circuit is installed between the current source and the AS-i-Bus (8,9).

13. The actuator-sensor-interface system according to any of Claims 1 to 12,
**characterized in that** the power supply unit (1) and the monitoring device (10) as well as optionally the transmission signal decoding device and the monitoring device (10) are arranged in a shared housing.

14. A method for operating an actuator-sensor-interface system, comprising at least two slaves (S1,S2,S3), a master (M), an actuator-sensor-interface bus (8,9), AS-i-Bus (8,9), to which the slaves (S1,S2,S3) and the master (M) are connected, as well as a power supply unit (1) that is capable of supplying the slaves (S1,S2,S3) with current via the AS-i-Bus (8,9), whereby each slave (S1,S2,S3) has a binary address and, through the modulation of such a sequence of transmission pulses onto the AS-i-Bus (8,9) that matches the binary address of the slave (S1,S2,S3), can be called and induced to emit a response signal consisting of a sequence of response pulses modulated onto the AS-i-Bus (8,9) by the called slave (S1,S2,S3), **characterized in that**
the response pulses are detected by a monitoring device (10) that, in case of the superimposition of the response signals of at least two slaves (S1,S2,S3), triggers a switching or warning signal so that said signal is triggered, if at least two slaves (S1,S2,S3) have the same binary address, if these slaves (S1,S2,S3) have each been simultaneously induced by a sequence - especially one and the same sequence - of transmission pulses to emit their response signal and if these response signals are superimposed.

15. The method according to Claim 19,
**characterized in that**, in a cyclic sequence, so many different sequences of transmission pulses are modulated onto the AS-i-Bus (8,9) as the actuator-sensor-interface system has slaves (S1,S2,S3) and, between every two sequences of transmission pulses, a transmission pause is maintained during which no transmission pulses are modulated onto the AS-i-Bus (8,9).

16. The method according to Claim 14 or 15,
**characterized in that**, as the monitoring device (10), a device is used that is capable of recognizing a superimposition of two response signals by the fact that the amplitude of the fluctuations
- of the current intensity generated by the power supply unit (1) or
- flowing in the AS-i-Bus (8,9)
exceeds a predefined threshold value.

17. The method according to Claim 16,
**characterized in that** the threshold value is selected so as to be greater than the maximum amplitude of those fluctuations affecting the current intensity generated by the power supply unit (1) or the current intensity flowing in the AS-i-Bus, said fluctuations being caused by the fact that a slave (S1,S2,S3) emits a response signal, and it is selected so as to be smaller than twice this amplitude.

18. The actuator-sensor-interface system according to Claim 17,
**characterized in that** the threshold value is selected so as to be greater than 1.1 times the maximum amplitude of those fluctuations affecting the current intensity generated by the power supply unit (1) or the current intensity flowing in the AS-i-Bus (8,9), said fluctuations being caused by the fact that a slave (S1,S2,S3) emits a response signal, and it is selected so as to be smaller than 1.9 times this amplitude.

19. The method according to any of Claims 19 to 27,
**characterized in that** the transmission pulses are detected by a transmission signal decoding device that, in each sequence of transmission pulses that matches a binary address of a slave (S1,S2,S3), is capable of recognizing this address.

20. The method according to Claim 19,
**characterized in that** the switching or warning signal is detected and, when said signal is ascertained, the most recently recognized address of a slave (S1,S2,S3) is displayed and/or stored.

21. The method according to any of Claims 14 to 20,
**characterized in that** the current drop that occurs at the resistor (11) that is installed between the power supply unit (1) and a line (8,9) of the AS-i-bus (8,9) or in the AS-i-Bus (8,9) is picked up, fed to the monitoring device (10) and used as a measure of the current intensity generated by the power supply unit (1) or as a measure of the current intensity flowing in the AS-i-Bus (8,9), whereby either the magnitude of the current intensity generated by the power supply unit (1) or the magnitude of the current intensity flowing in the AS-i-Bus (8,9) is ascertained on the basis of this current drop,
or
the amplitude of the fluctuations of the current intensity generated by the power supply unit (1) or the amplitude of the fluctuations of the current intensity flowing in the AS-i-Bus (8,9) is ascertained on the basis of the fluctuations of this current drop.

22. The method according to any of Claims 14 to 21,
**characterized in that**, a transformer (6,7) having a first and a second winding (6,7) is used, whereby the first winding (6) is installed between the power supply unit (1) and a line (8,9) of the AS-i-bus (8,9)
or
in a line (8,9) of the AS-i-bus (8,9), and the fluctuations of the voltage generated by the second winding (7) are used as a measure of the fluctuations of the current intensity generated by the power supply unit (1) or as a measure of the fluctuations of the current intensity flowing AS-i-Bus (8,9) and the amplitude of the fluctuations of the current intensity generated by the power supply unit (1) or the amplitude of the fluctuations of the current intensity flowing in the AS-i-Bus (8,9) is ascertained on the basis of the behavior over time of the voltage generated by the second winding (7).

23. The method according to any of Claims 14 to 22,
**characterized in that**, during each transmission pause, the occurrence of response pulses is detected and, if they are absent during a transmission pause, the most recently recognized address of a slave (S1,S2,S3) is displayed and/or stored.

24. The method according to Claim 23,
**characterized in that** an error signal is triggered if response pulses are absent during a transmission pause.

25. The method according to any of the preceding claims,
**characterized in that**, when an AS-i-bus is used beyond its normal AS-i-line length according onto the AS-i-specifications, the AS-i-bus is divided up into a number of line segments which, each on their own, meet the AS-i-requirements, whereby a repeater with its own power supply is installed in each line segment, the method according to Claim 19 being carried out by said repeater.

## Revendications

1. Système d'interface capteur-actionneur comprenant au moins deux esclaves (S1,S2,S3), un maître (M), un bus d'interface capteur-actionneur (8,9), bus AS-i (8,9), auquel sont connectés les esclaves (S1,S2,S3) et le maître (M), ainsi qu'un bloc d'alimentation (1) capable d'alimenter les esclaves (S1,S2,S3) en courant via le bus AS-i (8,9), chaque esclave (S1,S2,S3) possédant une adresse binaire et, par modulation sur le bus AS-i (8,9) d'une séquence d'impulsions d'émission correspondant à l'adresse binaire de l'esclave (S1,S2,S3), pouvant être appelé et incité à délivrer un signal de réponse composé d'une séquence d'impulsions de réponse modulée sur le bus AS-i par l'esclave appelé (S1,S2,S3), **caractérisé par** un dispositif de surveillance (10) capable de saisir les impulsions de réponse et qui, lorsque les signaux de réponse d'au moins deux esclaves se superposent, déclenche un signal de commutation ou un signal avertisseur, de sorte que celui-ci est déclenché lorsqu'au moins deux esclaves (S1,S2,S3) possèdent la même adresse binaire, que lesdits esclaves (S1,S2,S3) ont été incités par une séquence d'impulsions d'émission à délivrer simultanément chacun son signal de réponse et que ces signaux de réponse se superposent.

2. Système d'interface capteur-actionneur selon la revendication 1, **caractérisé en ce que** celui-ci est capable
- de moduler sur le bus AS-i (8,9), en séquence cyclique, un nombre de séquences différentes d'impulsions d'émission correspondant au nombre d'esclaves (S1,S2,S3) du système d'interface capteur-actionneur et
- d'observer entre deux séquences d'impulsions d'émission une pause d'émission, pendant laquelle il ne se produit aucune modulation d'impulsion d'émission sur le bus AS-i (8,9).

3. Système d'interface capteur-actionneur selon l'une des revendications 1 ou 2, **caractérisé en ce que** le dispositif de surveillance (10) est en mesure de reconnaître une superposition de deux signaux de réponse à ce que que l'amplitude des fluctuations de l'intensité de courant délivrée par le bloc d'alimentation (1) ou circulant dans le bus AS-i (8,9) dépasse un seuil prédéfini.

4. Système d'interface capteur-actionneur selon la revendication 3, **caractérisé en ce que** le seuil est supérieur au courant d'émission simple d'un esclave et inférieur au courant d'émission double d'un esclave.

5. Système d'interface capteur-actionneur selon la revendication 3, **caractérisé en ce que** le seuil est supérieur à l'amplitude maximale des fluctuations de l'intensité de courant délivrée par le bloc d'alimentation (1) ou de l'intensité de courant circulant dans le bus AS-1 (8,9) et qui sont dues au fait qu'un esclave (S1,S2,S3) délivre un signal de réponse, et inférieur à la double valeur de ladite ampitude.

6. Système d'interface capteur-actionneur selon l'une des revendications 1 à 5, **caractérisé par** un dispositif de décodage des signaux d'émission qui est capable de saisir les impulsions d'émission et d'identifier l'adresse dans chaque séquence d'impulsions d'émission correspondant à une adresse binaire d'un esclave (S1,S2,S3).

7. Système d'interface capteur-actionneur selon la revendication 6, **caractérisé en ce que** le dispositif de décodage des signaux d'émission est en mesure de saisir le signal de commutation ou le signal avertisseur et, en cas de détection de ce dernier, d'afficher et/ou de mémoriser la dernière adresse identifiée d'un esclave (S1,S2,S3).

8. Système d'interface capteur-actionneur selon l'une des revendications 2 à 7, **caractérisé par** une résistance (11) connectée entre le bloc d'alimentation (1) et une ligne (8,9) du bus AS-i (8,9) ou dans le bus AS-i de sorte que la chute de tension se produisant à la résistance (11) constitue la mesure de l'intensité de courant délivrée par le bloc d'alimentation (1) ou circulant dans le bus AS-i (8,9), le dispositif de surveillance (10) étant en mesure
- soit de saisir ladite chute de tension et d'en déduire la valeur de l'intensité de courant délivrée par le bloc d'alimentation (1) ou la valeur de l'intensité de courant circulant dans le bus AS-i,
- soit de saisir les fluctuations de ladite chute de tension et d'en déduire l'amplitude des fluctuations de l'intensité de courant délivrée par le bloc d'alimentation (1) ou l'amplitude des fluctuations de l'intensité de courant circulant dans le bus AS-i.

9. Système d'interface capteur-actionneur selon l'une des revendications 3 à 5, **caractérisé par** un transformateur (6,7) comportant un premier et un deuxième enroulement (6,7), le premier enroulement (6) étant connecté
- entre le bloc d'alimentation (1) et une ligne (8,9) du bus AS-i (8,9) ou
- dans une ligne (8,9) du bus AS-i (8,9)
de sorte que les fluctuations de la tension délivrée par le deuxième enroulement (7) constituent la mesure
- des fluctuations de l'intensité de courant délivrée par le bloc d'alimentation (1) ou
- des fluctuations de l'intensité de courant circulant dans le bus AS-i (8,9)
et le dispositif de surveillance (10) étant capable de saisir la tension délivrée par le deuxième enroulement (7) et de déterminer à partir de l'allure dans le temps de celle-ci
- l'amplitude des fluctuations de l'intensité de courant délivrée par le bloc d'alimentation (1) ou
- l'amplitude des fluctuations de l'intensité de courant circulant dans le bus AS-i (8,9).

10. Système d'interface capteur-actionneur selon la revendication 2 et l'une des revendications 10 ou 11, **caractérisé en ce que** le dispositif de décodage des signaux d'émission est en mesure de saisir les impulsions de réponse apparaissant pendant chaque pause d'émission et, en cas d'absence de celles-ci pendant une pause d'émission, d'afficher et/ou de mémoriser la dernière adresse identifiée d'un esclave (S1,S2,S3).

11. Système d'interface capteur-actionneur selon la revendication 10, **caractérisé en ce que** le dispositif de décodage des signaux d'émission est capable de déclencher un signal d'erreur en cas d'absence d'impulsions de réponse pendant une pause d'émission.

12. Système d'interface capteur-actionneur selon l'une des revendications 1 à 11, **caractérisé en ce que** le bloc d'alimentation (1) comprend une source de courant ainsi qu'un découplage de données, le découplage de données étant connecté entre la source de courant et le bus AS-i (8,9).

13. Système d'interface capteur-actionneur selon l'une des revendications 1 à 12, **caractérisé en ce que** le bloc d'alimentation (1) et le dispositif de surveillance (10) ainsi que, le cas échéant, le dispositif de décodage des signaux d'émission et le dispositif de surveillance (10) sont disposés dans le même boîtier.

14. Procédé destiné à commander un système d'interface capteur-actionneur comprenant au moins deux esclaves (S1,S2,S3), un maître (M), un bus d'interface capteur-actionneur (8,9), bus AS-i (8,9), auquel sont connectés les esclaves (S1,S2,S3) et le maître (M), ainsi qu'un bloc d'alimentation (1) capable d'alimenter les esclaves (S1,S2,S3) en courant via le bus AS-i (8,9), chaque esclave (S1,S2,S3) possédant une adresse binaire et, en modulant sur le bus AS-i (8,9) une séquence d'impulsions d'émission correspondant à l'adresse binaire de l'esclave (S1,S2,S3), pouvant être appelé et incité à délivrer un signal de réponse composé d'une séquence d'impulsions de réponse modulée sur le bus AS-i par l'esclave appelé (S1,S2,S3), **caractérisé en ce que**
les impulsions de réponse sont saisies par un dispositif de surveillance (10) qui, lorsque les signaux de réponse d'au moins deux esclaves se superposent, déclenche un signal de commutation ou un signal avertisseur, de sorte que celui-ci est déclenché lorsqu'au moins deux esclaves (S1,S2,S3) possèdent la même adresse binaire, que lesdits esclaves (S1,S2,S3) sont incités par une séquence, en particulier par une même séquence d'impulsions d'émission, à délivrer simultanément chacun son signal de réponse et que ces signaux de réponse se superposent.

15. Procédé selon la revendication 19, **caractérisé en ce que**, en séquence cyclique, autant de séquences différentes d'impulsions d'émission sont modulées sur le bus AS-i que le système d'interface capteur-actionneur possède d'esclaves (S1,S2,S3) et qu'on observe entre deux séquences d'impulsions d'émission une pause d'émission, pendant laquelle aucune impulsion d'émission n'est modulée sur le bus AS-i (8,9).

16. Procédé selon la revendication 14 ou 15, **caractérisé en ce que** le dispositif de surveillance (10) utilisé est capable de reconnaître une superposition de deux signaux de réponse à ce que l'amplitude des fluctuations de l'intensité de courant
- délivrée par le bloc d'alimentation (1) ou
- circulant dans le bus AS-i (8,9)
dépasse un premier seuil prédéfini.

17. Procédé selon la revendication 16, **caractérisé en ce qu'**on choisit un seuil supérieur à l'amplitude maximale des fluctuations de l'intensité de courant délivrée par le bloc d'alimentation (1) ou de l'intensité de courant circulant dans le bus AS-i (8,9) et qui sont dues au fait qu'un esclave (S1,S2,S3) délivre un signal de réponse, et inférieur au double de ladite amplitude.

18. Système d'interface capteur-actionneur selon la revendication 17, **caractérisé en ce que** le seuil choisi est supérieur à 1,1 fois l'amplitude maximale des fluctuations de l'intensité de courant délivrée par le bloc d'alimentation (1) ou de l'intensité de courant circulant dans le bus AS-i (8,9) et qui sont dues au fait qu'un esclave (S1,S2,S3) délivre un signal de réponse, et inférieur à 1,9 fois cette amplitude.

19. Procédé selon l'une des revendications 19 à 27, **caractérisé en ce que** les impulsions d'émission sont saisies au moyen d'un dispositif de décodage des signaux d'émission qui est capable d'identifier dans chaque séquence d'impulsions d'émission l'adresse correspondant à une adresse binaire d'un esclave (S1,S2,S3).

20. Procédé selon la revendication 19, **caractérisé en ce que** le signal de commutation ou le signal avertisseur est saisi et que, en cas de détection de ce dernier, la dernière adresse identifiée d'un esclave (S1,S2,S3) est affichée et/ou stockée.

21. Procédé selon l'une des revendications 14 à 20, **caractérisé en ce que** la chute de tension se produisant à une résistance (11) connectée entre le bloc d'alimentation (10) et une ligne (8,9) du bus AS-i (8,9) ou dans le bus AS-i (8,9) est prélevée, acheminée vers le dispositif de surveillance et utilisée en tant que mesure de l'intensité de courant délivrée par le bloc d'alimentation (1) ou circulant dans le bus AS-i (8,9), et que
soit ladite chute de tension est utilisée pour déterminer la valeur de l'intensité de courant délivrée par le bloc d'alimentation (1) ou la valeur de l'intensité de courant circulant dans le bus AS-i (8,9),
soit les fluctuations de ladite chute de tension sont utilisées pour déterminer l'amplitude des fluctuations de l'intensité de courant délivrée par le bloc d'alimentation (1) ou l'amplitude des fluctuations de l'intensité de courant circulant dans le bus AS-i (8,9).

22. Procédé selon l'une des revendications 14 à 21, **caractérisé en ce qu'** un transformateur (6,7) comportant un premier et un deuxième enroulement (6,7) est utilisé, le premier enroulement (6) étant connecté entre le bloc d'alimentation (1) et une ligne (8,9) du bus AS-i (8,9)
ou
dans une ligne (8,9) du bus AS-i (8,9), que les fluctuations de la tension délivrée par le deuxième enroulement (7) sont utilisées en tant que mesure des fluctuations de l'intensité de courant délivrée par le bloc d'alimentation (1) ou des fluctuations de l'intensité de courant circulant dans le bus AS-i (8,9) et que l'on détermine, à partir de l'allure dans le temps de la tension délivrée par le deuxième enroulement (7), l'amplitude des fluctuations de l'intensité de courant délivrée par le bloc d'alimentation (1) ou l'amplitude des fluctuations de l'intensité de courant circulant dans le bus AS-i (8,9).

23. Procédé selon l'une des revendications 14 à 22, **caractérisé en ce que** les impulsions de réponse apparaissant pendant chaque pause d'émission sont saisies et, en cas d'absence de celles-ci pendant une pause d'émission, la dernière adresse identifiée d'un esclave (S1,S2,S3) est affichée et/ou mémorisée.

24. Procédé selon la revendication 23, **caractérisé en ce qu'**un signal d'erreur est déclenché en cas d'absence d'impulsions de réponse pendant une pause d'émission.

25. Procédé selon l'une des revendications précédentes, **caractérisé en ce que**, lorsqu'on utilise un bus AS-i dont la longueur de ligne AS-i normale est supérieure aux spécifications AS-i, le bus AS-i est subdivisé en plusieurs segments de ligne qui, pris isolément, répondent aux exigences AS-i, en insérant dans chaque segment de ligne un répéteur doté de son propre bloc secteur, via lequel répéteur s'effectue le procédé selon la revendication 19.
